# EUROPEAN PATENT APPLICATION

(11) **EP 4 716 195 A1**
(43) Date of publication of application: **25.03.2026**
(21) Application number: 24818661.1
(22) Date of filing: 05.06.2024
(51) Int. Cl.: H04L 69/06

(54) **COMMUNICATION METHOD AND RELATED APPARATUS**

(30) Priority: 09.06.2023 CN 202310688941
(71) Applicant: Huawei Technologies Co., Ltd., Shenzhen, Guangdong 518129 (CN)
(72) Inventor: DU, Rui, Shenzhen, Guangdong 518129 (CN); NAREN, Gerile, Shenzhen, Guangdong 518129 (CN); TANG, Zhuqing, Shenzhen, Guangdong 518129 (CN); HAN, Xiao, Shenzhen, Guangdong 518129 (CN)
(74) Representative: Körber, Martin Hans
(86) International application number: PCT/CN2024/097403
(87) International publication number: WO 2024/251129

(57) **Abstract**

A communication method and a related apparatus are provided. The method includes: An SBP initiator determines a first request frame, and transmits the first request frame to an SBP responder. When a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by the SBP initiator, and the third field indicates whether the number of sensing responders is mandatory.

## Description

This application claims priority to Chinese Patent Application No. 202310688941.8, filed with the China National Intellectual Property Administration on June 9, 2023, and entitled "COMMUNICATION METHOD AND RELATED APPARATUS", which is incorporated herein by reference in its entirety.

### TECHNICAL FIELD

This application relates to the field of wireless communication technologies, and in particular, to a communication method and a related apparatus.

### BACKGROUND

A wireless local area network (wireless local area network, WLAN) has features such as flexibility, mobility, and low costs. With development of communication technologies and growth of user requirements, application research on the WLAN is gradually deepened. For example, WLAN sensing (WLAN sensing) is currently being studied, and a special sensing scenario, namely, sensing by proxy (sensing by proxy, SBP), is introduced into the current 802.11bf standard. SBP means that a non-access point station (non-access point station, non-AP STA) may request an access point (access point, AP) to serve as a proxy of the non-access point station to perform WLAN sensing, and enable the AP to feed back a sensing measurement result to the non-access point station. With development of the wireless sensing technologies, sensing performance of SBP may be further improved.

### SUMMARY

Embodiments of this application provide a communication method and a related apparatus. In embodiments of this application, a rule for setting a related field in an SBP procedure is adjusted and optimized, to help improve sensing performance of SBP.

The following describes this application from different aspects. It should be understood that, for the following implementations and beneficial effect of different aspects, refer to each other.

According to a first aspect, this application provides a communication method. The method is applied to an SBP responder. The SBP responder may be the SBP responder, or may be a module or a chip in the SBP responder. For example, the SBP responder may be an AP. The method includes:

The SBP responder receives a first request frame from an SBP initiator, where when a value of a first field in the first request frame indicates that a preferred sensing responder in a preferred sensing responder list carried in the first request frame is mandatory, a second field and/or a third field in the first request frame are/is not reserved fields/a reserved field, the second field indicates a number of sensing responders requested by the SBP initiator, and the third field indicates whether the number of sensing responders is mandatory; and
the SBP responder parses the second field and/or the third field in the first request frame.

In this application, the first field may be a Mandatory Preferred Responder field in the first request frame, the second field may be a Number of Sensing Responders field in the first request frame, and the third field may be a Mandatory Number of Responders field in the first request frame. Generally, when the value of the first field is 1, it indicates that the preferred sensing responder in the preferred sensing responder list carried in the first request frame is mandatory, and when the value of the first field is 0, it indicates that the preferred sensing responder in the preferred sensing responder list carried in the first request frame is optional. In the conventional technology, it is defined as follows: When the value of the first field in the first request frame indicates that the preferred sensing responder in the preferred sensing responder list carried in the first request frame is mandatory, the second field and the third field in the first request frame are reserved fields. Different from the conventional technology, in this application, a rule for setting a related field in an SBP procedure is adjusted and optimized. To be specific, it is defined in this application that when the value of the first field in the first request frame indicates that the preferred sensing responder in the preferred sensing responder list carried in the first request frame is mandatory, the second field and/or the third field in the first request frame are/is not reserved fields/a reserved field. Based on the implementation of this application, exchange flexibility of the SBP procedure can be improved, thereby helping improve sensing performance of SBP.

In a possible implementation, a number of preferred sensing responders in the preferred sensing responder list carried in the first request frame is N, where N is an integer greater than 0.

That the second field and/or the third field in the first request frame are/is not reserved fields/a reserved field includes:
The second field indicates that the number of sensing responders requested by the SBP initiator is 0 or M, and a value of the third field indicates that the number of sensing responders is mandatory or optional.

Alternatively,
the second field indicates that the number of sensing responders requested by the SBP initiator is 0 or M, and the third field is a reserved field.

Optionally, the method may further include:
The SBP responder determines M sensing responders based on the first request frame, where the M sensing responders are M preferred sensing responders in N preferred sensing responders included in the preferred sensing responder list carried in the first request frame, M is equal to N, and M is an integer greater than 0.

In this implementation, that the second field and/or the third field in the first request frame are/is not reserved fields/a reserved field may be understood as follows: The second field indicates that the number of sensing responders requested by the SBP initiator is 0 or M, and the value of the third field indicates that the number of sensing responders is mandatory or optional; or the second field indicates that the number of sensing responders requested by the SBP initiator is 0 or M, and the third field is a reserved field. In this implementation, that M is equal to N means that the SBP responder may determine the N preferred sensing responders in the preferred sensing responder list carried in the first request frame as M sensing responders requested by the SBP initiator for use by the SBP responder during a sensing setup. This is highly operable.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is mandatory.

Optionally, the method may further include:
The SBP responder determines M sensing responders based on the first request frame, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In this implementation, that the second field and/or the third field in the first request frame are/is not reserved fields/a reserved field may be understood as follows: The second field indicates that the number of sensing responders requested by the SBP initiator is M, and the value of the third field indicates that the number of sensing responders is mandatory. In this implementation, when M is a positive integer less than or equal to N, the SBP responder may select, from the N preferred sensing responders included in the preferred sensing responder list carried in the first request frame, M preferred sensing responders as the M sensing responders requested by the SBP initiator; or when M is a positive integer greater than or equal to N, the N preferred sensing responders in the preferred sensing responder list carried in the first request frame are mandatory sensing responders, and the (M-N) sensing responders selected from outside the preferred sensing responder list carried in the first request frame need to be used as the M sensing responders requested by the SBP initiator, for use by the SBP responder during a sensing setup. In this way, related parameters are further optimized, and applicability is high.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is optional.

Optionally, the method may further include:
The SBP responder determines a maximum of M sensing responders based on the first request frame, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In this implementation, that the second field and/or the third field in the first request frame are/is not reserved fields/a reserved field may be understood as follows: The second field indicates that the number of sensing responders requested by the SBP initiator is M, and the value of the third field indicates that the number of sensing responders is optional. In this implementation, when M is a positive integer less than or equal to N, the SBP responder may select, from the N preferred sensing responders included in the preferred sensing responder list carried in the first request frame, the maximum of M preferred sensing responders as the M sensing responders requested by the SBP initiator; or when M is a positive integer greater than or equal to N, the SBP responder may select a maximum of M sensing responders in total from the N preferred sensing responders in the preferred sensing responder list carried in the first request frame and sensing responders outside the preferred sensing responder list carried in the first request frame, for use by the SBP responder during a sensing setup. In this way, related parameters are further optimized, and applicability is high.

In a possible implementation, the first request frame is an SBP request frame, or the first request frame is a DMG SBP request frame.

In a possible implementation, the first request frame further includes a fourth field, and the fourth field carries address information of a sensing responder.

The method further includes:
The SBP responder transmits a first response frame and/or a first termination frame to the SBP initiator.

The first response frame includes a fifth field, and the fifth field carries address information of a sensing responder; and the first termination frame includes a sixth field, and the sixth field carries address information of a sensing responder.

When the first response frame indicates to accept the first request frame, the address information of the sensing responder included in the fifth field in the first response frame is a subset of the address information of the sensing responder included in the fourth field in the first request frame.

When the first response frame indicates to reject the first request frame, or when the first termination frame indicates that a termination reason is that an SBP condition is not met, the address information of the sensing responder included in the fifth field in the first response frame is a subset of the address information of the sensing responder included in the sixth field in the first termination frame. Optionally, the address information of the sensing responder included in the fifth field in the first response frame or the address information of the sensing responder included in the sixth field in the first termination frame is a subset of the address information of the sensing responder included in the fourth field in the first request frame. Optionally, when the first response frame indicates to reject the first request frame, or when the first termination frame indicates that the termination reason is that the SBP condition is not met, the first response frame may further include a thirteenth field, and the first termination frame may further include a sixteenth field. The thirteenth field indicates a number of sensing responders (suggested by the SBP responder), and the sixteenth field indicates a suggested number of sensing responders.

In this implementation, when a status code field in the first response frame is set to SUCCESS (SUCCESS), it may indicate that the first response frame indicates to accept the first request frame; or when the status code field in the first response frame is set to REJECTED_WITH_SUGGESTED_CHANGES (REJECTED_WITH _SUGGESTED_CHANGES) or REQUEST_DECLINED (REQUEST_DECLINED), it may indicate that the first response frame indicates to reject the first request frame. Different from a prior-art implementation in which when the first response frame indicates to accept the first request frame, the first response frame may notify the SBP initiator of address information of a sensing responder that is unknown to the SBP initiator (that is, the conventional technology has issues with privacy leakage), this application proposes that when the first response frame indicates to accept the first request frame, the address information of the sensing responder included in the first response frame is the subset of the address information of the sensing responder included in the first request frame, so that privacy leakage can be avoided.

In addition, different from a prior-art implementation in which when the first response frame indicates to reject the first request frame, or when the first termination frame indicates that the termination reason is that the SBP condition is not met, the first response frame or the first termination frame includes only the number of sensing responders suggested by the SBP responder, this application proposes that when the first response frame indicates to reject the first request frame, or when the first termination frame indicates that the termination reason is that the SBP condition is not met, the address information of the sensing responder included in the fifth field in the first response frame or the address information of the sensing responder included in the sixth field in the first termination frame is the subset of the address information of the sensing responder included in the fourth field in the first request frame. In other words, this application proposes that when the first response frame indicates to reject the first request frame, or the first termination frame indicates that the termination reason is that the SBP condition is not met, the first response frame or the first termination frame may carry more information, for example, the address information of the sensing responder. Optionally, to avoid information leakage, the address information of the sensing responder carried in the first response frame or the first termination frame may be the subset of the address information of the sensing responder included in the first request frame.

In a possible implementation, the first response frame further includes a seventh field, and the seventh field carries identity information of the sensing responder.

A number of pieces of address information included in the fifth field in the first response frame is less than or equal to a number of pieces of identity information included in the seventh field in the first response frame.

In this implementation, a number of pieces of identity information of sensing responders carried in the first response frame may be greater than or equal to a number of pieces of address information of sensing responders carried in the first response frame. Optionally, when the number of pieces of identity information of sensing responders carried in the first response frame is equal to the number of pieces of address information of sensing responders carried in the first response frame, the identity information of the sensing responder carried in the first response frame may one-to-one correspond to the address information of the sensing responder carried in the first response frame. Optionally, when the identity information of the sensing responder carried in the first response frame is less than the address information of the sensing responder carried in the first response frame, the identity information of the sensing responder that is included in the first response frame or the first termination frame and that belongs to the subset of the address information of the sensing responder in the first request frame may one-to-one correspond to the address information of the sensing responder.

In a possible implementation, when the first response frame indicates to reject the first request frame, the first response frame further includes one or more of the following fields:
an eighth field and a ninth field.

The eighth field indicates whether the first response frame carries a preferred sensing responder list, and the ninth field indicates a number of preferred sensing responders in the preferred sensing responder list carried in the first response frame.

In this implementation, when the first response frame indicates to reject the first request frame, the first response frame may further carry more information, for example, may further include one or more of information indicating whether the first response frame carries the preferred sensing responder list, information indicating the number of preferred sensing responders in the preferred sensing responder list carried in the first response frame, or the like.

In a possible implementation, when the first termination frame indicates that the termination reason is that the SBP condition is not met, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame. Optionally, a number of pieces of address information included in the sixth field in the first termination frame is less than or equal to a number of pieces of identity information included in the tenth field in the first termination frame.

In this implementation, when the first termination frame indicates that the termination reason is that the SBP condition is not met, the first termination frame may further carry more information, for example, may further include one or more of the identity information of the sensing responder, information indicating whether the first response frame carries the preferred sensing responder list, information indicating the number of preferred sensing responders in the preferred sensing responder list carried in the first response frame, or the like.

In a possible implementation, the first response frame is an SBP response frame, or the first response frame is a DMG SBP response frame.

In a possible implementation, the first termination frame is an SBP termination frame, or the first termination frame is a DMG SBP termination frame.

According to a second aspect, this application provides a communication method. The method is applied to an SBP responder. The SBP responder may be the SBP responder, or may be a module or a chip in the SBP responder. For example, the SBP responder may be an AP. The method includes:
The SBP responder receives a first request frame from an SBP initiator; and
the SBP responder transmits a first response frame to the SBP initiator.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by the SBP responder and address information of a sensing responder suggested by the SBP responder. Optionally, the number of sensing responders suggested by the SBP responder may be carried in a thirteenth field.

Different from a prior-art implementation in which when the first response frame indicates to accept the first request frame, the first response frame may notify the SBP initiator of address information of a sensing responder that is unknown to the SBP initiator (that is, the conventional technology has issues with privacy leakage), this application proposes that when the first response frame indicates to accept the first request frame, the address information of the sensing responder included in the first response frame is the subset of the address information of the sensing responder included in the first request frame, so that privacy leakage can be avoided.

In addition, different from a prior-art implementation in which when the first response frame indicates to reject the first request frame, the first response frame includes only the number of sensing responders suggested by the SBP responder, this application provides that when the first response frame indicates to reject the first request frame, in addition to the number of sensing responders suggested by the SBP responder, the first response frame may further include the address information of the sensing responder. In other words, in this application, when the first response frame indicates to reject the first request frame, the first response frame carries more information, for example, the address information of the sensing responder (or referred to as a number of sensing responders suggested by the SBP responder or a suggested number of sensing responders).

In a possible implementation, the address information of the sensing responder included in the first request frame is carried in a fourth field, and the address information of the sensing responder included in the first response frame is carried in a fifth field; and the address information of the sensing responder included in the fifth field in the first response frame is a subset of the address information of the sensing responder included in the fourth field in the first request frame.

In this implementation, the address information of the sensing responder included in the first request frame may be carried in the fourth field, and the address information of the sensing responder included in the first response frame may be carried in the fifth field. Optionally, when the first response frame indicates to reject the first request frame, the address information of the sensing responder included in the first response frame may be the subset of the address information of the sensing responder included in the first request frame. In this way, privacy leakage can be avoided, and the address information of the sensing responder carried in the first response frame may be used to assist the SBP initiator in determining which address information of a sensing responder may be carried when initiating an SBP procedure next time. This helps improve applicability of the solution.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is mandatory, the address information of the sensing responder included in the fifth field in the first response frame is the same as the address information included in the fourth field in the first request frame.

In a possible implementation, the first response frame further includes a seventh field, and the seventh field carries identity information of the sensing responder.

A number of pieces of address information of sensing responders included in the fifth field in the first response frame is the same as a number of pieces of identity information of sensing responders included in the seventh field in the first response frame.

In a possible implementation, the address information of the sensing responder included in the fifth field in the first response frame one-to-one corresponds to the identity information of the sensing responder included in the seventh field in the first response frame.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is optional, the address information of the sensing responder included in the fifth field in the first response frame is the subset of the address information of the sensing responder included in the fourth field in the first request frame.

In a possible implementation, the first response frame further includes a seventh field, and the seventh field carries identity information of the sensing responder.

A number of pieces of address information of sensing responders included in the fifth field in the first response frame is less than or equal to a number of pieces of identity information of sensing responders included in the seventh field in the first response frame.

In this implementation, the identity information of the sensing responder carried in the first response frame may be greater than or equal to the address information of the sensing responder carried in the first response frame. Optionally, when the identity information of the sensing responder carried in the first response frame is equal to the address information of the sensing responder carried in the first response frame, the identity information of the sensing responder carried in the first response frame may one-to-one correspond to the address information of the sensing responder carried in the first response frame. Optionally, when the identity information of the sensing responder carried in the first response frame is less than the address information of the sensing responder carried in the first response frame, identity information of a sensing responder that is included in the first response frame or the first termination frame and that belongs to the subset of the address information of the sensing responder in the first request frame may one-to-one correspond to address information of a sensing responder.

In a possible implementation, the method further includes:
The SBP responder transmits a first termination frame to the SBP initiator.

The first termination frame includes a sixth field, and the sixth field carries address information of a sensing responder. When the first termination frame indicates that a termination reason is that an SBP condition is not met, the address information of the sensing responder included in the sixth field in the first termination frame is a subset of the address information of the sensing responder included in the fourth field in the first request frame.

In this implementation, when the first termination frame indicates that the termination reason is that the SBP condition is not met, the first termination frame may further carry more information, for example, may further include address information of a sensing responder. Optionally, the address information of the sensing responder included in the first termination frame may be carried in the sixth field. Optionally, the address information of the sensing responder included in the sixth field in the first termination frame may alternatively be the subset of the address information of the sensing responder included in the fourth field in the first request frame. In this way, privacy leakage can be avoided, and the address information of the sensing responder carried in the first termination frame may be used to assist the SBP initiator in determining which address information of a sensing responder may be carried when initiating an SBP procedure next time. This helps improve applicability of the solution.

In a possible implementation, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame. Optionally, a number of pieces of address information included in the sixth field in the first termination frame is less than or equal to a number of pieces of identity information included in the tenth field in the first termination frame.

In this implementation, when the first termination frame indicates that the termination reason is that the SBP condition is not met, the first termination frame may further carry more information, for example, may further include one or more of the identity information of the sensing responder, information indicating whether the first response frame carries the preferred sensing responder list, information indicating the number of preferred sensing responders in the preferred sensing responder list carried in the first response frame, or the like.

In a possible implementation, when the first response frame indicates to reject the first request frame, the first response frame further includes one or more of the following fields:
an eighth field and a ninth field;

The eighth field indicates whether the first response frame carries a preferred sensing responder list, and the ninth field indicates a number of preferred sensing responders in the preferred sensing responder list carried in the first response frame.

In this implementation, when the first response frame indicates to reject the first request frame, the first response frame may further carry more information, for example, may further include one or more of information indicating whether the first response frame carries the preferred sensing responder list, information indicating the number of preferred sensing responders in the preferred sensing responder list carried in the first response frame, or the like.

In a possible implementation, the first termination frame is an SBP termination frame, or the first termination frame is a DMG SBP termination frame.

In a possible implementation, the first request frame is an SBP request frame, or the first request frame is a DMG SBP request frame.

In a possible implementation, the first response frame is an SBP response frame, or the first response frame is a DMG SBP response frame.

According to a third aspect, this application provides a communication method. The method is applied to an SBP initiator. The SBP initiator may be the SBP initiator, or may be a module or a chip in the SBP initiator. For example, the SBP initiator may be a non-AP STA. The method includes:
The SBP initiator determines a first request frame; and
the SBP initiator transmits the first request frame to an SBP responder.

When a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by the SBP initiator, and the third field indicates whether the number of sensing responders is mandatory.

In a possible implementation, a number of preferred sensing responders in the preferred sensing responder list carried in the first request frame is N, where N is an integer greater than 0.

That the second field and/or the third field in the first request frame are/is not reserved fields/a reserved field includes:
The second field indicates that the number of sensing responders requested by the SBP initiator is 0 or M, and a value of the third field indicates that the number of sensing responders is mandatory or optional.

Alternatively,
the second field indicates that the number of sensing responders requested by the SBP initiator is 0 or M, and the third field is a reserved field.

The first request frame is used to determine M sensing responders, where the M sensing responders are M preferred sensing responders in N preferred sensing responders included in the preferred sensing responder list carried in the first request frame, M is equal to N, and M is an integer greater than 0.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is mandatory.

The first request frame is used to determine M sensing responders, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is optional.

The first request frame is used to determine a maximum of M sensing responders, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In a possible implementation, the first request frame is an SBP request frame, or the first request frame is a DMG SBP request frame.

In a possible implementation, the first request frame further includes a fourth field, and the fourth field carries address information of a sensing responder.

The method further includes:
The SBP initiator receives a first response frame and/or a first termination frame from the SBP responder.

The first response frame includes a fifth field, and the fifth field carries address information of a sensing responder; and the first termination frame includes a sixth field, and the sixth field carries address information of a sensing responder.

When the first response frame indicates to accept the first request frame, the address information of the sensing responder included in the fifth field in the first response frame is a subset of the address information of the sensing responder included in the fourth field in the first request frame.

When the first response frame indicates to reject the first request frame, or when the first termination frame indicates that a termination reason is that an SBP condition is not met, the address information of the sensing responder included in the fifth field in the first response frame is a subset of the address information of the sensing responder included in the sixth field in the first termination frame. Optionally, the address information of the sensing responder included in the fifth field in the first response frame or the address information of the sensing responder included in the sixth field in the first termination frame is a subset of the address information of the sensing responder included in the fourth field in the first request frame. Optionally, when the first response frame indicates to reject the first request frame, or when the first termination frame indicates that the termination reason is that the SBP condition is not met, the first response frame may further include a thirteenth field, and the first termination frame may further include a sixteenth field. The thirteenth field indicates a number of sensing responders (suggested by the SBP responder), or described as, that the thirteenth field indicates a number of sensing responders (set up or planned to be set up by the SBP responder), or described as, the thirteenth field indicates a number of sensing responders (responded by the SBP responder), or described as, the thirteenth field indicates a number of sensing responders. The sixteenth field indicates a number of sensing responders (suggested by the SBP responder), or described as, the sixteenth field indicates a number of sensing responders (set up or planned to be set up by the SBP responder), or described as, the sixteenth field indicates a number of sensing responders (responded by the SBP responder), or described as, the sixteenth field indicates a number of sensing responders.

In a possible implementation, the first response frame further includes a seventh field, and the seventh field carries identity information of the sensing responder.

A number of pieces of address information included in the fifth field in the first response frame is less than or equal to a number of pieces of identity information included in the seventh field in the first response frame.

In a possible implementation, when the first response frame indicates to reject the first request frame, the first response frame further includes one or more of the following fields:
an eighth field and a ninth field.

The eighth field indicates whether the first response frame carries a preferred sensing responder list, and the ninth field indicates a number of preferred sensing responders in the preferred sensing responder list carried in the first response frame.

In a possible implementation, when the first termination frame indicates that the termination reason is that the SBP condition is not met, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame. Optionally, a number of pieces of address information included in the sixth field in the first termination frame is less than or equal to a number of pieces of identity information included in the tenth field in the first termination frame.

In a possible implementation, the first response frame is an SBP response frame, or the first response frame is a DMG SBP response frame.

In a possible implementation, the first termination frame is an SBP termination frame, or the first termination frame is a DMG SBP termination frame.

According to a fourth aspect, this application provides a communication method. The method is applied to an SBP initiator. The SBP initiator may be the SBP initiator, or may be a module or a chip in the SBP initiator. For example, the SBP initiator may be a non-AP STA. The method includes:
The SBP initiator transmits a first request frame to an SBP responder; and
the SBP initiator receives a first response frame from the SBP responder.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by the SBP responder and address information of a sensing responder suggested by the SBP responder. Optionally, the number of sensing responders suggested by the SBP responder may be carried in a thirteenth field.

In a possible implementation, the address information of the sensing responder included in the first request frame is carried in a fourth field, and the address information of the sensing responder included in the first response frame is carried in a fifth field; and the address information of the sensing responder included in the fifth field in the first response frame is a subset of the address information of the sensing responder included in the fourth field in the first request frame.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is mandatory, the address information of the sensing responder included in the fifth field in the first response frame is the same as the address information included in the fourth field in the first request frame.

In a possible implementation, the first response frame further includes a seventh field, and the seventh field carries identity information of the sensing responder.

A number of pieces of address information of sensing responders included in the fifth field in the first response frame is the same as a number of pieces of identity information of sensing responders included in the seventh field in the first response frame.

In a possible implementation, the address information of the sensing responder included in the fifth field in the first response frame one-to-one corresponds to the identity information of the sensing responder included in the seventh field in the first response frame.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is optional, the address information of the sensing responder included in the fifth field in the first response frame is the subset of the address information of the sensing responder included in the fourth field in the first request frame.

In a possible implementation, the first response frame further includes a seventh field, and the seventh field carries identity information of the sensing responder.

A number of pieces of address information of sensing responders included in the fifth field in the first response frame is less than or equal to a number of pieces of identity information of sensing responders included in the seventh field in the first response frame.

In a possible implementation, the method further includes:
The SBP initiator receives a first termination frame from the SBP responder.

The first termination frame includes a sixth field, and the sixth field carries address information of a sensing responder. When the first termination frame indicates that a termination reason is that an SBP condition is not met, the address information of the sensing responder included in the sixth field in the first termination frame is a subset of the address information of the sensing responder included in the fourth field in the first request frame.

In a possible implementation, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame. Optionally, a number of pieces of address information included in the sixth field in the first termination frame is less than or equal to a number of pieces of identity information included in the tenth field in the first termination frame.

In a possible implementation, when the first response frame indicates to reject the first request frame, the first response frame further includes one or more of the following fields:
an eighth field and a ninth field.

The eighth field indicates whether the first response frame carries a preferred sensing responder list, and the ninth field indicates a number of preferred sensing responders in the preferred sensing responder list carried in the first response frame.

In a possible implementation, the first termination frame is an SBP termination frame, or the first termination frame is a DMG SBP termination frame.

In a possible implementation, the first request frame is an SBP request frame, or the first request frame is a DMG SBP request frame.

In a possible implementation, the first response frame is an SBP response frame, or the first response frame is a DMG SBP response frame.

According to a fifth aspect, this application provides a communication apparatus. The apparatus includes:
a transceiver unit, configured to receive a first request frame from an SBP initiator, where when a value of a first field in the first request frame indicates that a preferred sensing responder in a preferred sensing responder list carried in the first request frame is mandatory, a second field and/or a third field in the first request frame are/is not reserved fields/a reserved field; the second field indicates a number of sensing responders requested by the SBP initiator; and the third field indicates whether the number of sensing responders is mandatory; and
a processing unit, configured to parse the second field and/or the third field in the first request frame.

In a possible implementation, a number of preferred sensing responders in the preferred sensing responder list carried in the first request frame is N, where N is an integer greater than 0.

That the second field and/or the third field in the first request frame are/is not reserved fields/a reserved field includes:
The second field indicates that the number of sensing responders requested by the SBP initiator is 0 or M, and a value of the third field indicates that the number of sensing responders is mandatory or optional.

Alternatively,
the second field indicates that the number of sensing responders requested by the SBP initiator is 0 or M, and the third field is a reserved field.

Optionally, the processing unit is further configured to:
determine M sensing responders based on the first request frame, where the M sensing responders are M preferred sensing responders in N preferred sensing responders included in the preferred sensing responder list carried in the first request frame, M is equal to N, and M is an integer greater than 0.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is mandatory.

Optionally, the processing unit is further configured to:
determine M sensing responders based on the first request frame, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is optional.

Optionally, the processing unit is further configured to:
determine a maximum of M sensing responders based on the first request frame, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In a possible implementation, the first request frame is an SBP request frame, or the first request frame is a DMG SBP request frame.

In a possible implementation, the first request frame further includes a fourth field, and the fourth field carries address information of a sensing responder.

The transceiver unit is further configured to:
transmit a first response frame and/or a first termination frame to the SBP initiator.

The first response frame includes a fifth field, and the fifth field carries address information of a sensing responder; and the first termination frame includes a sixth field, and the sixth field carries address information of a sensing responder.

When the first response frame indicates to accept the first request frame, the address information of the sensing responder included in the fifth field in the first response frame is a subset of the address information of the sensing responder included in the fourth field in the first request frame.

When the first response frame indicates to reject the first request frame, or when the first termination frame indicates that a termination reason is that an SBP condition is not met, the address information of the sensing responder included in the fifth field in the first response frame or the address information of the sensing responder included in the sixth field in the first termination frame is a subset of the address information of the sensing responder included in the fourth field in the first request frame.

In a possible implementation, the first response frame further includes a seventh field, and the seventh field carries identity information of the sensing responder.

A number of pieces of address information included in the fifth field in the first response frame is less than or equal to a number of pieces of identity information included in the seventh field in the first response frame.

In a possible implementation, when the first response frame indicates to reject the first request frame, the first response frame further includes one or more of the following fields:
an eighth field and a ninth field.

The eighth field indicates whether the first response frame carries a preferred sensing responder list, and the ninth field indicates a number of preferred sensing responders in the preferred sensing responder list carried in the first response frame.

In a possible implementation, when the first termination frame indicates that the termination reason is that the SBP condition is not met, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame.

In a possible implementation, the first response frame is an SBP response frame, or the first response frame is a DMG SBP response frame.

In a possible implementation, the first termination frame is an SBP termination frame, or the first termination frame is a DMG SBP termination frame.

According to a sixth aspect, this application provides a communication apparatus. The apparatus includes:
a transceiver unit, configured to receive a first request frame from an SBP initiator.

The transceiver unit is configured to transmit a first response frame to the SBP initiator.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by an SBP responder and address information of a sensing responder suggested by the SBP responder. Optionally, the number of sensing responders suggested by the SBP responder may be carried in a thirteenth field.

In a possible implementation, the address information of the sensing responder included in the first request frame is carried in a fourth field, and the address information of the sensing responder included in the first response frame is carried in a fifth field; and the address information of the sensing responder included in the fifth field in the first response frame is the subset of the address information of the sensing responder included in the fourth field in the first request frame.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is mandatory, the address information of the sensing responder included in the fifth field in the first response frame is the same as the address information included in the fourth field in the first request frame.

In a possible implementation, the first response frame further includes a seventh field, and the seventh field carries identity information of the sensing responder.

A number of pieces of address information of sensing responders included in the fifth field in the first response frame is the same as a number of pieces of identity information of sensing responders included in the seventh field in the first response frame.

In a possible implementation, the address information of the sensing responder included in the fifth field in the first response frame one-to-one corresponds to the identity information of the sensing responder included in the seventh field in the first response frame.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is optional, the address information of the sensing responder included in the fifth field in the first response frame is the subset of the address information of the sensing responder included in the fourth field in the first request frame.

In a possible implementation, the first response frame further includes a seventh field, and the seventh field carries identity information of the sensing responder.

A number of pieces of address information of sensing responders included in the fifth field in the first response frame is less than or equal to a number of pieces of identity information of sensing responders included in the seventh field in the first response frame.

In a possible implementation, the transceiver unit is further configured to:
transmit a first termination frame to the SBP initiator.

The first termination frame includes a sixth field, and the sixth field carries address information of a sensing responder. When the first termination frame indicates that a termination reason is that an SBP condition is not met, the address information of the sensing responder included in the sixth field in the first termination frame is a subset of the address information of the sensing responder included in the fourth field in the first request frame.

In a possible implementation, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame.

In a possible implementation, when the first response frame indicates to reject the first request frame, the first response frame further includes one or more of the following fields:
an eighth field and a ninth field.

The eighth field indicates whether the first response frame carries a preferred sensing responder list, and the ninth field indicates a number of preferred sensing responders in the preferred sensing responder list carried in the first response frame.

In a possible implementation, the first termination frame is an SBP termination frame, or the first termination frame is a DMG SBP termination frame.

In a possible implementation, the first request frame is an SBP request frame, or the first request frame is a DMG SBP request frame.

In a possible implementation, the first response frame is an SBP response frame, or the first response frame is a DMG SBP response frame.

According to a seventh aspect, this application provides a communication apparatus. The apparatus includes:
a processing unit, configured to determine a first request frame; and
a transceiver unit, configured to transmit the first request frame to an SBP responder.

When a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by an SBP initiator, and the third field indicates whether the number of sensing responders is mandatory.

In a possible implementation, a number of preferred sensing responders in the preferred sensing responder list carried in the first request frame is N, where N is an integer greater than 0.

That the second field and/or the third field in the first request frame are/is not reserved fields/a reserved field includes:
The second field indicates that the number of sensing responders requested by the SBP initiator is 0 or M, and a value of the third field indicates that the number of sensing responders is mandatory or optional.

Alternatively,
the second field indicates that the number of sensing responders requested by the SBP initiator is 0 or M, and the third field is a reserved field.

The first request frame is used to determine M sensing responders, where the M sensing responders are M preferred sensing responders in N preferred sensing responders included in the preferred sensing responder list carried in the first request frame, M is equal to N, and M is an integer greater than 0.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is mandatory.

The first request frame is used to determine M sensing responders, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In a possible implementation, a number of preferred sensing responders in the preferred sensing responder list carried in the first request frame is N, where N is an integer greater than 0.

That the second field and the third field in the first request frame are not reserved fields includes:
The second field indicates that the number of sensing responders requested by the SBP initiator is M, and a value of the third field indicates that the number of sensing responders is optional.

The first request frame is used to determine a maximum of M sensing responders, where when M is a positive integer less than or equal to N, the M sensing responders are M preferred sensing responders in N preferred sensing responders included in the preferred sensing responder list carried in the first request frame; or when M is a positive integer greater than or equal to N, the M sensing responders include N preferred sensing responders in the preferred sensing responder list carried in the first request frame, and (M-N) sensing responders that are not included in the preferred sensing responder list carried in the first request frame.

In a possible implementation, the first request frame is an SBP request frame, or the first request frame is a DMG SBP request frame.

In a possible implementation, the first request frame further includes a fourth field, and the fourth field carries address information of a sensing responder.

The transceiver unit is further configured to:
receive a first response frame and/or a first termination frame from the SBP responder.

The first response frame includes a fifth field, and the fifth field carries address information of a sensing responder; and the first termination frame includes a sixth field, and the sixth field carries address information of a sensing responder.

When the first response frame indicates to accept the first request frame, the address information of the sensing responder included in the fifth field in the first response frame is a subset of the address information of the sensing responder included in the fourth field in the first request frame.

When the first response frame indicates to reject the first request frame, or when the first termination frame indicates that a termination reason is that an SBP condition is not met, the address information of the sensing responder included in the fifth field in the first response frame or the address information of the sensing responder included in the sixth field in the first termination frame is a subset of the address information of the sensing responder included in the fourth field in the first request frame.

In a possible implementation, the first response frame further includes a seventh field, and the seventh field carries identity information of the sensing responder.

A number of pieces of address information included in the fifth field in the first response frame is less than or equal to a number of pieces of identity information included in the seventh field in the first response frame.

In a possible implementation, when the first response frame indicates to reject the first request frame, the first response frame further includes one or more of the following fields:
an eighth field and a ninth field.

The eighth field indicates whether the first response frame carries a preferred sensing responder list, and the ninth field indicates a number of preferred sensing responders in the preferred sensing responder list carried in the first response frame.

In a possible implementation, when the first termination frame indicates that a termination reason is that an SBP condition is not met, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame.

In a possible implementation, the first response frame is an SBP response frame, or the first response frame is a DMG SBP response frame.

In a possible implementation, the first termination frame is an SBP termination frame, or the first termination frame is a DMG SBP termination frame.

According to an eighth aspect, this application provides a communication apparatus. The apparatus includes:
a transceiver unit, configured to transmit a first request frame to an SBP responder.

The transceiver unit is configured to receive a first response frame from the SBP responder.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by the SBP responder and address information of a sensing responder suggested by the SBP responder. Optionally, the number of sensing responders suggested by the SBP responder may be carried in a thirteenth field.

In a possible implementation, the address information of the sensing responder included in the first request frame is carried in a fourth field, and the address information of the sensing responder included in the first response frame is carried in a fifth field; and the address information of the sensing responder included in the fifth field in the first response frame is the subset of the address information of the sensing responder included in the fourth field in the first request frame.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is mandatory, the address information of the sensing responder included in the fifth field in the first response frame is the same as the address information included in the fourth field in the first request frame.

In a possible implementation, the first response frame further includes a seventh field, and the seventh field carries identity information of the sensing responder.

A number of pieces of address information of sensing responders included in the fifth field in the first response frame is the same as a number of pieces of identity information of sensing responders included in the seventh field in the first response frame.

In a possible implementation, the address information of the sensing responder included in the fifth field in the first response frame one-to-one corresponds to the identity information of the sensing responder included in the seventh field in the first response frame.

In a possible implementation, the first request frame further includes a first field, and the first field indicates whether a preferred sensing responder in a preferred sensing responder list carried in the first request frame is mandatory.

When the first response frame indicates to accept the first request frame, and a value of the first field in the first request frame indicates that the preferred sensing responder in the preferred sensing responder list carried in the first request frame is optional, the address information of the sensing responder included in the fifth field in the first response frame is the subset of the address information of the sensing responder included in the fourth field in the first request frame.

In a possible implementation, the first response frame further includes a seventh field, and the seventh field carries identity information of the sensing responder.

A number of pieces of address information of sensing responders included in the fifth field in the first response frame is less than or equal to a number of pieces of identity information of sensing responders included in the seventh field in the first response frame.

In a possible implementation, the transceiver unit is further configured to:
receive a first termination frame from the SBP responder.

The first termination frame includes a sixth field, and the sixth field carries address information of a sensing responder. When the first termination frame indicates that a termination reason is that an SBP condition is not met, the address information of the sensing responder included in the sixth field in the first termination frame is the subset of the address information of the sensing responder included in the fourth field in the first request frame.

In a possible implementation, the first termination frame further includes one or more of the following fields:
a tenth field, an eleventh field, and a twelfth field.

The tenth field carries identity information of a sensing responder, the eleventh field indicates whether the first termination frame carries a preferred sensing responder list, and the twelfth field indicates a number of preferred sensing responders in the preferred sensing responder list carried in the first termination frame.

In a possible implementation, when the first response frame indicates to reject the first request frame, the first response frame further includes one or more of the following fields:
an eighth field and a ninth field.

The eighth field indicates whether the first response frame carries a preferred sensing responder list, and the ninth field indicates a number of preferred sensing responders in the preferred sensing responder list carried in the first response frame.

In a possible implementation, the first termination frame is an SBP termination frame, or the first termination frame is a DMG SBP termination frame.

In a possible implementation, the first request frame is an SBP request frame, or the first request frame is a DMG SBP request frame.

In a possible implementation, the first response frame is an SBP response frame, or the first response frame is a DMG SBP response frame.

According to a ninth aspect, this application provides a communication apparatus. The communication apparatus includes a processor, a transceiver, and a memory. The processor, the transceiver, and the memory are coupled to each other. The memory stores a computer program. The processor and the transceiver are configured to invoke the computer program in the memory, to enable the communication apparatus to perform the method according to any one of the first aspect or the second aspect, or the possible implementations of any one of the first aspect or the second aspect.

In a possible design, the communication apparatus may be a chip for implementing the foregoing method or a device including a chip.

According to a tenth aspect, this application provides a communication apparatus. The communication apparatus includes a processor, a transceiver, and a memory. The processor, the transceiver, and the memory are coupled to each other. The memory stores a computer program. The processor and the transceiver are configured to invoke the computer program in the memory, to enable the communication apparatus to perform the method according to any one of the third aspect or the fourth aspect, or the possible implementations of any one of the third aspect or the fourth aspect.

In a possible design, the communication apparatus may be a chip for implementing the foregoing method or a device including a chip.

According to an eleventh aspect, this application provides a communication apparatus. The communication apparatus includes a processor and an interface circuit. The interface circuit is configured to: receive a signal from another communication apparatus other than the communication apparatus and transmit the signal to the processor, or transmit a signal from the processor to another communication apparatus other than the communication apparatus. The processor is configured to implement, by using a logic circuit or by executing code instructions, the method according to any one of the first aspect or the second aspect, or the possible implementations of any one of the first aspect or the second aspect.

According to a twelfth aspect, this application provides a communication apparatus. The communication apparatus includes a processor and an interface circuit. The interface circuit is configured to: receive a signal from another communication apparatus other than the communication apparatus and transmit the signal to the processor, or transmit a signal from the processor to another communication apparatus other than the communication apparatus. The processor is configured to implement, by using a logic circuit or by executing code instructions, the method according to any one of the third aspect or the fourth aspect, or the possible implementations of any one of the third aspect or the fourth aspect.

According to a thirteenth aspect, this application provides a computer-readable storage medium. The storage medium stores a computer program or instructions. When the computer program or the instructions are executed by a computer, the method according to any one of the first aspect or the second aspect, or the possible implementations of any one of the first aspect or the second aspect is implemented.

According to a fourteenth aspect, this application provides a computer-readable storage medium. The storage medium stores a computer program or instructions. When the computer program or the instructions are executed by a computer, the method according to any one of the third aspect or the fourth aspect, or the possible implementations of any one of the third aspect or the fourth aspect is implemented.

According to a fifteenth aspect, this application provides a computer program product. When a computer reads and executes the computer program product, the computer is enabled to perform the method according to any one of the first aspect or the second aspect, or the possible implementations of any one of the first aspect or the second aspect.

According to a sixteenth aspect, this application provides a computer program product. When a computer reads and executes the computer program product, the computer is enabled to perform the method according to any one of the third aspect or the fourth aspect, or the possible implementations of any one of the third aspect or the fourth aspect.

According to a seventeenth aspect, this application provides a communication system. The communication system may include an SBP initiator and an SBP responder. The SBP initiator is configured to perform any method in the third aspect or the fourth aspect, and the SBP responder is configured to perform the method according to any one of the first aspect or the second aspect, or the possible implementations of any one of the first aspect or the second aspect.

### BRIEF DESCRIPTION OF DRAWINGS

FIG. 1 is a diagram of an SBP procedure according to an embodiment of this application;
FIG. 2 is a diagram of frame structures of action fields in an SBP request frame;
FIG. 3 is a diagram of frame structures of action fields in an SBP response frame;
FIG. 4 is a diagram of a structure of a DMG SBP Parameters element;
FIG. 5 is a diagram of frame structures of action fields in an SBP termination frame;
FIG. 6 is a diagram of a structure of a DMG SBP Termination Control field;
FIG. 7 is a diagram of a structure of an access point according to an embodiment of this application;
FIG. 8 is a diagram of a structure of a station according to an embodiment of this application;
FIG. 9 is a schematic flowchart of a communication method according to an embodiment of this application;
FIG. 10 is a diagram of address information and identity information in an SBP response frame according to an embodiment of this application;
FIG. 11 is another diagram of address information and identity information in an SBP response frame according to an embodiment of this application;
FIG. 12 is another schematic flowchart of a communication method according to an embodiment of this application;
FIG. 13 is still another diagram of address information and identity information in an SBP response frame according to an embodiment of this application;
FIG. 14 is yet another diagram of address information and identity information in an SBP response frame according to an embodiment of this application;
FIG. 15 is a diagram of a structure of a communication apparatus according to an embodiment of this application;
FIG. 16 is a diagram of another structure of a communication apparatus according to an embodiment of this application; and
FIG. 17 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, "first", "second", and the like are merely intended to distinguish between different objects but do not indicate a particular order. In addition, unless otherwise specified, "/" represents "or". For example, A/B may represent A or B. A term "and/or" in this specification describes only an association relationship between associated objects and represents that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, a, b, and c each may be singular or plural.

In addition, the terms "include", "have", and any variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In this application, the term "example", "for example", or the like represents giving an example, an illustration, or a description. Any embodiment or design scheme described as "example", "in an example" or "for example" in this application should not be explained as being more preferred or having more advantages than another embodiment or design scheme. Exactly, use of the word "example", "in an example", "for example", or the like is intended to present a related concept in a specific manner.

It may be understood that, in this application, "when", "provided", and "if" all mean that an apparatus performs corresponding processing in an objective case, and are not intended to limit time, and do not mean that the apparatus is required to have a determining action during implementation, and do not mean any other limitation.

In this application, an element represented in a singular form is intended to represent "one or more", but does not represent "one and only one", unless otherwise specified.

It may be understood that in embodiments of this application, "B corresponding to A" indicates that there is a correspondence between A and B, and B may be determined based on A. Determining B based on A does not mean that B is determined based only on A, and B may alternatively be determined based on A and/or other information.

The following explains and describes related technical features in embodiments of this application. It should be noted that these explanations are intended to facilitate understanding of embodiments of this application, but should not be construed as a limitation to the protection scope claimed in this application.

### 1. WLAN sensing technology

The WLAN sensing (WLAN sensing) technology is a sensing technology based on a radar technology. Certainly, the WLAN sensing technology may alternatively be a sensing technology based on any wireless carrier communication, and is not limited to the sensing technology based on the radar technology. Sensing based on the radar technology is used as an example. A radar includes a transmit antenna and a receive antenna. The transmit antenna transmits an electromagnetic wave, the electromagnetic wave is reflected when encountering a target (target), and a reflected wave is received by the receive antenna. A radar system analyzes feature information of the target, for example, a location, a shape, a motion feature, and a motion track, through signal processing based on changes of a transmitted wave and a received wave. Radar sensing has many unique advantages. For example, the radar is not affected by lighting conditions, and has a capability of penetrating obstacles, so that personal privacy can be better protected. In addition, the radar has a farther sensing range, and does not cause harm to people or animals. An advantage of implementing sensing by using the radar technology is mainly reflected in detection of a moving object, and a motion status of the target, such as a motion direction and a motion speed, is observed and interpreted through Doppler effect of an echo of the target.

Introducing the sensing technology into a WLAN has a good business prospect. The WLAN sensing technology may be applied to different scenarios. For example, in sports, this technology may be used to detect motion statuses and motion tracks of a person and a ball; and in a home environment, this technology may be used to perform human body fall detection to prevent an elderly person from falling down. Channel state information (channel state information, CSI) is processed to interpret a motion status and a track of a person. The WLAN sensing technology can fully utilize existing WLAN resources without requiring massive costs. In a future densely deployed WLAN, there are a plurality of STAs in a coverage area of one AP, and the AP may perform proper resource scheduling for these STAs to improve a throughput and robustness of a system.

### 2. Sensing by proxy

The conventional technology (for example, the 802.11bf protocol) specifies a special sensing scenario: sensing by proxy (sensing by proxy, SBP). SBP means that a non-AP STA may request anAP to serve as a proxy (proxy) of the non-AP STA to perform WLAN sensing, and enable the AP to feed back a sensing measurement result to the non-AP STA. The non-AP STA that initiates a sensing by proxy procedure is referred to as an SBP initiator (SBP initiator), and the AP that participates in the sensing by proxy procedure as the proxy (proxy) is referred to as an SBP responder (SBP responder). In addition, the AP is also a sensing initiator (sensing initiator) in a sensing procedure. Generally, the SBP initiator is usually a STA, and the SBP responder is usually an AP. It may be understood that the non-AP STA may be referred to as a STA for short, and the non-AP STA and the STA may be used interchangeably in this specification.

The sensing by proxy procedure may include but is not limited to one or more of the following phases:
(1) In an SBP setup (SBP setup) phase, the SBP initiator (usually a non-AP STA) requests to set up SBP with the SBP responder (usually an AP), and the SBP responder receives or rejects the SBP setup request.
(2) A WLAN sensing (WLAN sensing) phase includes a sensing measurement setup and a trigger-based (trigger-based, TB) sensing measurement instance. In the sensing measurement setup, the SBP responder (which is also a sensing initiator, namely, an AP) and one or more sensing responders (namely, other non-AP STAs) negotiate and set a measurement parameter of WLAN sensing. In the trigger-based sensing measurement instance, TB sensing measurement occurs. In TB sensing measurement, the AP serves as a sensing initiator to initiate a sensing measurement procedure, and the one or more non-AP STAs serve as sensing responders to participate in the sensing measurement procedure.
(3) In an SBP reporting (SBP reporting) phase, the SBP responder reports a sensing measurement result to the SBP initiator.
(4) In an SBP termination (SBP termination) phase, the SBP procedure is terminated. The termination phase may be initiated by either the SBP initiator or the SBP responder. For example, when a sensing measurement session (Sensing Measurement Session) fails to be set up, the AP may transmit an SBP termination frame to terminate the SBP procedure. For another example, the AP or the STA may alternatively transmit an SBP termination frame in a process of setting up a sensing measurement session, or when there is no need to continue sensing measurement after a sensing measurement session is completed, the AP or the STA may alternatively transmit an SBP termination frame, to terminate the SBP procedure.

It should be understood that the SBP termination frame may also be described as an SBP termination frame, an SBP termination frame, or the like. This is not limited herein.

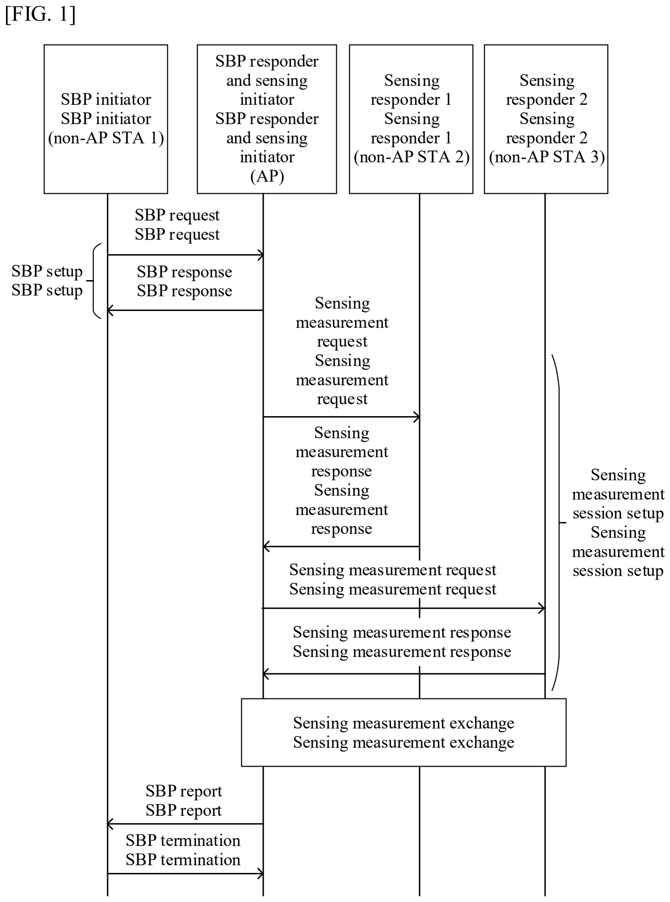

For example, FIG. 1 is a diagram of an SBP procedure according to an embodiment of this application. As shown in FIG. 1, in an SBP setup (SBP setup) phase, an SBP initiator (non-AP STA 1) transmits an SBP request (SBP request) frame to an SBP responder (AP), to request the SBP responder (AP) to initiate a sensing measurement procedure as a proxy of the SBP initiator (non-AP STA 1); and the SBP responder (AP) replies with an SBP response (SBP response) frame to accept or reject the request from the SBP initiator. In a sensing measurement session setup (sensing measurement setup) phase, the sensing initiator (AP) separately transmits a sensing measurement request (sensing measurement request) frame to a sensing responder 1 (non-AP STA 2) and a sensing responder 2 (non-AP STA 3), and the sensing responder 1 (non-AP STA 2) and the sensing responder 2 (non-AP STA 3) separately reply with a sensing measurement response (sensing measurement response) frame. In a sensing measurement exchange (sensing measurement exchange) phase, TB sensing measurement occurs. After sensing measurement is completed, the SBP responder (AP) feeds back an SBP report (SBP report) to the SBP initiator (non-AP STA 1). After receiving the SBP report, the SBP initiator (non-AP STA 1) may transmit an SBP termination frame to terminate the SBP procedure.

The following describes frame structures of action fields (Action field) in the SBP request frame.

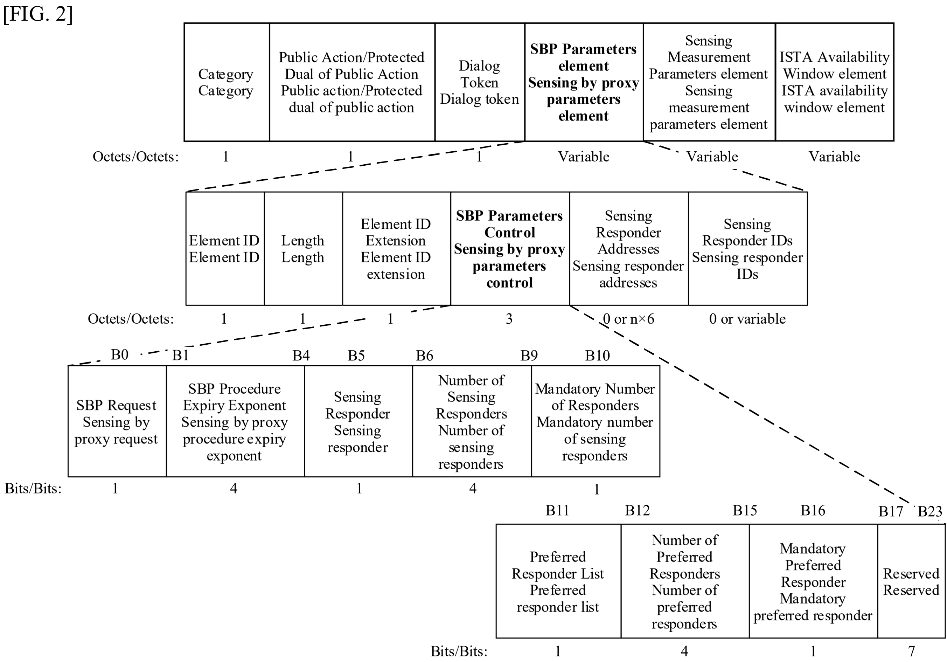

For example, FIG. 2 is a diagram of frame structures of action fields in an SBP request frame. As shown in FIG. 2, the SBP request frame transmitted by an SBP initiator carries a sensing by proxy parameters element (SBP Parameters element), and the SBP Parameters element includes a sensing by proxy parameters control (SBP Parameters Control) field. In the SBP Parameters Control field:
1. A number of sensing responders (Number of Sensing Responders) field indicates a number of sensing responders with which the SBP initiator requests an SBP responder (namely, a sensing initiator, namely, an AP) to set up sensing sessions (that is, a number of sensing responders requested by the SBP initiator).
2. A mandatory number of responders (Mandatory Number of Responders) field indicates whether the number of sensing responders requested by the SBP initiator is mandatory. If the number of sensing responders requested by the SBP initiator is mandatory, it indicates that the SBP initiator accepts sensing sessions with only this number of sensing responders (that is, the SBP responder needs to set up sensing sessions with a same requested/required number of sensing responders). If the number of sensing responders requested by the SBP initiator is not mandatory (namely, optional), the SBP initiator may also accept sensing sessions with less than this number of sensing responders (that is, the SBP responder may set up sensing sessions with less than the requested/required number of sensing responders). Generally, when a value of the Mandatory Number of Responders field is 1, it indicates that the number of sensing responders requested by the SBP initiator is mandatory; and when the value of the Mandatory Number of Responders field is 0, it indicates that the number of sensing responders requested by the SBP initiator is optional or not mandatory.
3. When a value of a preferred responder list (Preferred Responder List) field is 1, it indicates that the SBP Parameters element includes a sensing responder addresses (Sensing Responder Addresses) field. It may be understood that the Sensing Responder Addresses field carries address information of one or more preferred (sensing) responders, for use by the SBP responder during a sensing measurement session setup. For example, the address information may be a medium access control (medium access control, MAC) address or the like. This is not limited herein. For ease of description, an example in which the address information is a MAC address is mainly used for description in the subsequent embodiments. One MAC address corresponds to one sensing responder.
4. A number of preferred responders (Number of Preferred Responders) field indicates a number of preferred (sensing) responders, and MAC addresses of these preferred (sensing) responders are all included in the Sensing Responder Addresses field. Optionally, it may also be described as that the Number of Preferred Responders field indicates a number of preferred (sensing) responders included in a Preferred Responder List, and MAC addresses of these preferred (sensing) responders are all included in the Sensing Responder Addresses field.
5. A mandatory preferred responder (Mandatory Preferred Responder) field indicates whether these preferred (sensing) responders are mandatory. If these preferred (sensing) responders are mandatory, the SBP initiator accepts only sensing sessions set up with these preferred (sensing) responders (that is, the SBP responder can set up sensing sessions only with these preferred (sensing) responders). If these preferred (sensing) responders are not mandatory (namely, optional), the SBP initiator may accept a sensing session set up with a sensing responder that is not a preferred (sensing) responder (that is, the SBP responder may set up a sensing session with a sensing responder outside the preferred (sensing) responder list, or the SBP responder may set up a sensing session with a sensing responder that is not included in the Sensing Responder Addresses field). Generally, when a value of the Mandatory Preferred Responder field is 1, it indicates that these preferred (sensing) responders are mandatory; and when the value of the Mandatory Preferred Responder field is 0, it indicates that these preferred (sensing) responders are optional or not mandatory.

In the conventional technology, if a value of a Mandatory Preferred Responder field in an SBP request frame indicates that these preferred (sensing) responders are mandatory, a Number of Sensing Responders field and a Mandatory Number of Responders field are reserved fields.

It should be noted that a "preferred (sensing) responder" in this application may be described as a preferred sensing responder, or may be described as a preferred responder (Preferred Responder). In other words, the term "(sensing)" is not necessarily required. For ease of description, the two terms are uniformly described as the preferred sensing responder in the subsequent embodiments. In addition, the "Mandatory Number of Responders field" in this application may also be described as a "Mandatory Number of Sensing Responders field". In other words, descriptions about a mandatory number of responders and descriptions about a mandatory number of sensing responders may be interchangeable. For ease of description, the two terms are uniformly described as the mandatory number of sensing responders in the subsequent embodiments.

It may be understood that, for meanings of fields that are not described in FIG. 2, refer to an existing standard, for example, the 802.11bf standard. Details are not described herein.

The following describes frame structures of action fields (Action field) in an SBP response frame.

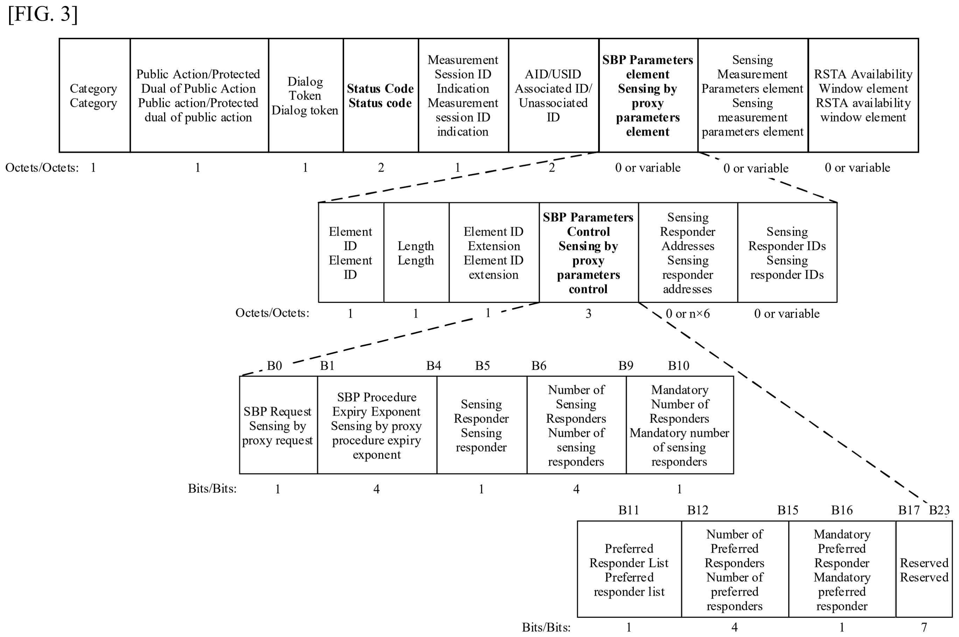

For example, FIG. 3 is a diagram of frame structures of action fields in an SBP response frame. As shown in FIG. 3, the SBP response frame replied by an SBP responder may carry a status code (Status Code) field. The status code field indicates that an SBP request is accepted or rejected. The SBP response frame may further carry an SBP Parameters element, and the SBP Parameters element includes an SBP Parameters Control field. In the SBP Parameters Control field:
1. A Number of Sensing Responders field indicates a number of sensing responders responded by the SBP responder or a number of sensing responders suggested by the SBP responder.

For example, when the status code field in the SBP response frame is SUCCESS (SUCCESS), the Number of Sensing Responders field indicates a number of sensing sessions that the SBP responder sets up or plans to set up with sensing responders (that is, a number of sensing responders responded by the SBP responder) in response to the request of the SBP initiator.

When the status code field in the SBP response frame is REJECTED_WITH_SUGGESTED_CHANGES (REJECTED_WITH_SUGGESTED_CHANGES), or when the SBP Parameters element is present in an SBP termination frame, the Number of Sensing Responders field indicates a number of sensing responders suggested by the SBP responder.

2. When a value of a Preferred Responder List field is 1, it indicates that the SBP Parameters element includes a Sensing Responder Addresses field and a Sensing Responder IDs field. In other words, the Sensing Responder Addresses field and the Sensing Responder IDs field are present. When the value of the Preferred Responder List field is 0, it indicates that the SBP Parameters element does not include the Sensing Responder Addresses field or the Sensing Responder IDs field. In other words, the Sensing Responder Addresses field and the Sensing Responder IDs field are not present. Optionally, if a field is present, the field carries useful information.

The Sensing Responder Addresses field in the SBP response frame carries MAC addresses of one or more sensing responders selected by the SBP responder. The Sensing Responder IDs field in the SBP response frame carries identity (identity, ID) information of the one or more sensing responders selected by the SBP responder. Optionally, the ID information may be an associated ID (associated ID, AID)/unassociated ID (unassociated ID, USID). One piece of ID information corresponds to one sensing responder.

3. A Number of Preferred Responders field indicates a number of MAC addresses in the Sensing Responder Addresses field and a number of AIDs/USIDs in the Sensing Responder IDs field.

4. Setting of a Mandatory Preferred Responder field is the same as that of the Mandatory Preferred Responder field in the SBP request frame are the same. Details are not described herein again.

In the conventional technology, when a Status Code in an SBP response frame is SUCCESS, and a value of a Preferred Responder List field in a corresponding SBP request frame is 1 (that is, the SBP request frame carries a preferred sensing responder list and a MAC address), a value of a Preferred Responder List field in the SBP response frame is set to 1, and a Sensing Responder Addresses field and a Sensing Responder IDs field are carried in the SBP response frame. In this case, an SBP responder may notify an SBP initiator of a MAC address of a sensing responder that is unknown to the SBP initiator, causing a potential privacy problem.

In addition, in the conventional technology, when the Status Code in the SBP response frame is not SUCCESS, an SBP Parameters element in the SBP response frame carries only a Number of Sensing Responders field, to indicate a number of sensing responders suggested by the SBP responder. However, such a parameter carrying manner has a limited information amount.

It may be understood that, for meanings of fields that are not described in FIG. 3, refer to an existing standard, for example, the 802.11bf standard. Details are not described herein.

The following describes a directional multi-gigabit (directional multi-gigabit, DMG) SBP procedure.

Optionally, a DMG SBP procedure is further specified in the conventional technology. The DMG SBP procedure and an SBP procedure are similar, but use different frame structures. The following describes structures of action fields (Action field) in an DMG SBP request frame. For example, as shown in the following Table 1:

**Table 1 Structures of action fields in a DMG SBP request frame**

| Order Order | Information Information |
|---|---|
| 1 | Category Category |
| 2 | (Unprotected/Protected) DMG action (Unprotected/Protected DMG Action) |
| 3 | Dialog token (Dialog Token) |
| 4 | DMG sensing measurement session element (DMG Sensing Measurement Session element) |
| 5 | DMG sensing by proxy parameters element (DMG SBP Parameters element) |

It may be understood that the DMG Sensing Measurement Session element may also be referred to as a DMG sensing measurement parameters element (DMG Sensing Measurement Parameters element), a DMG sensing measurement element (DMG Sensing Measurement Element), or the like. This is not limited herein.

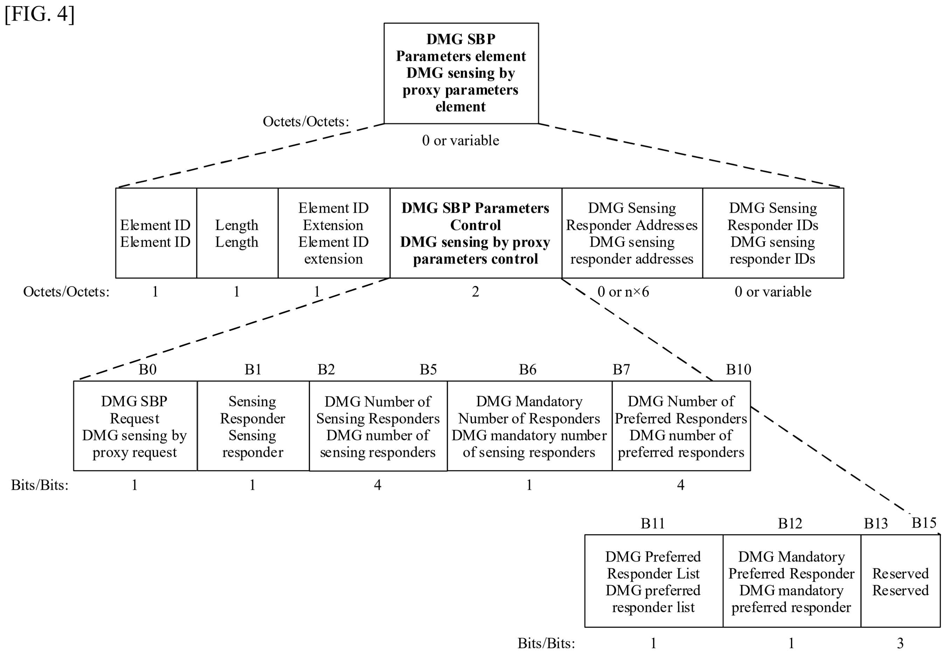

A structure of the DMG SBP Parameters element is shown in FIG. 4. The DMG SBP Parameters element includes a DMG sensing by proxy parameters control (DMG SBP Parameters Control) field.

In the conventional technology, if a value of a DMG mandatory preferred responder (DMG Mandatory Preferred Responder) field is 1, a DMG number of sensing responders (DMG Number of Sensing Responders) field and a DMG mandatory number of sensing responders (DMG Mandatory Number of Responders) field are reserved fields.

It may be understood that, for meanings of fields that are not described in Table 1, refer to an existing standard, for example, the 802.11bf standard. Details are not described herein.

The following describes structures of action fields (Action field) in an DMG SBP response frame. For example, as shown in the following Table 2:

**Table 2 Structures of action fields in a DMG SBP response frame**

| Order Order | Information Information |
|---|---|
| 1 | Category Category |
| 2 | (Unprotected/Protected) DMG action (Unprotected/Protected DMG Action) |
| 3 | Dialog token (Dialog Token) |
| 4 | DMG measurement setup identifier (DMG Measurement Setup ID) |
| 5 | Status code (Status Code) |
| 6 | DMG sensing by proxy parameters element (DMG SBP Parameters element) |
| 7 | ... |
| 8 | ... |
| 9 | ... |

It may be understood that the DMG Measurement Setup ID may also be referred to as a DMG measurement session identifier (DMG Measurement Session ID) or the like. This is not limited herein.

In the conventional technology, when a Status Code in a DMG SBP response frame is SUCCESS, and a value of a DMG Preferred Responder List field in a corresponding SBP request frame is 1 (that is, the DMG SBP request frame carries a DMG preferred sensing responder list and a DMG sensing responder address), a value of a DMG Preferred Responder List field in the DMG SBP response frame is set to 1, and a DMG Sensing Responder Addresses field and a DMG Sensing Responder IDs field are carried in the DMG SBP response frame. In this case, an SBP responder may notify an SBP initiator of a MAC address of a DMG sensing responder that is unknown to the SBP initiator, causing a potential privacy problem.

In addition, in the conventional technology, when the Status Code in the DMG SBP response frame is not SUCCESS, a DMG SBP Parameters element in the DMG SBP response frame carries only a DMG Number of Sensing Responders field, to indicate a number of DMG sensing responders suggested by the SBP responder. However, such a parameter carrying manner has a limited information amount.

It may be understood that, for meanings of fields that are not described in Table 2, refer to an existing standard, for example, the 802.11bf standard. Details are not described herein.

The following describes frame structures of action fields (Action field) in an SBP termination frame.

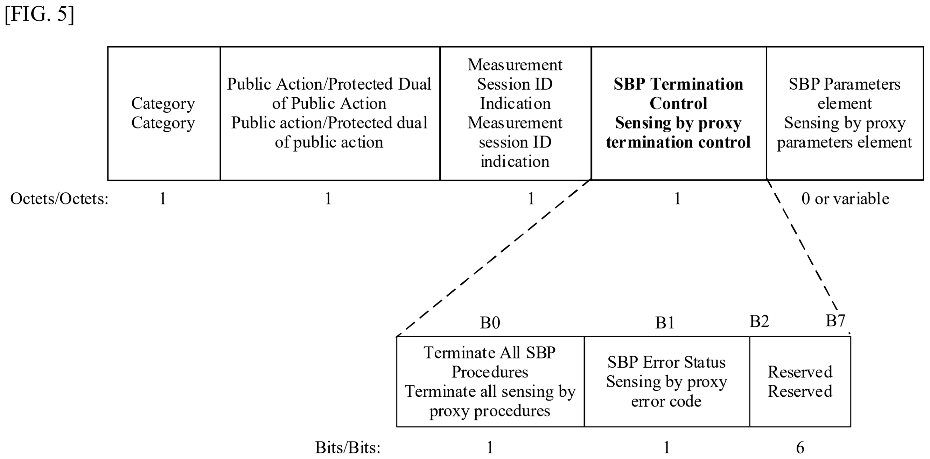

For example, FIG. 5 is a diagram of frame structures of action fields in an SBP termination frame. As shown in FIG. 5, the SBP termination frame may carry a sensing by proxy termination control (SBP Termination Control) field, and the SBP Termination Control field includes a sensing by proxy error code (SBP Error Status) field.

In the conventional technology, if a value of an SBP Error Status field is 1, it indicates that an SBP procedure is terminated because an SBP condition is incorrect (or the condition does not match or cannot be met). In addition, when the value of the SBP Error Status field is 1, an SBP Parameters element may be present in an SBP termination frame, and the SBP Parameters element in the SBP termination frame carries only a Number of Sensing Responders field, to indicate a number of sensing responders suggested by the SBP responder. However, such a parameter carrying manner has a limited information amount.

It may be understood that, for meanings of fields that are not described in FIG. 5, refer to an existing standard, for example, the 802.11bf standard. Details are not described herein.

The following describes frame structures of action fields (Action field) in a DMG SBP termination frame. For example, the structures of the action fields in the DMG SBP termination frame are shown in the following Table 3:

**Table 3 Structures of action fields in a DMG SBP termination frame**

| Order Order | Information Information |
|---|---|
| 1 | Category Category |
| 2 | (Unprotected/Protected) DMG action (Unprotected/Protected DMG Action) |
| 3 | DMG measurement session ID (DMG Measurement Session ID) |
| 4 | DMG sensing by proxy termination control (DMG SBP Termination Control) |
| 5 | DMG sensing by proxy parameters element (DMG SBP Parameters element) |

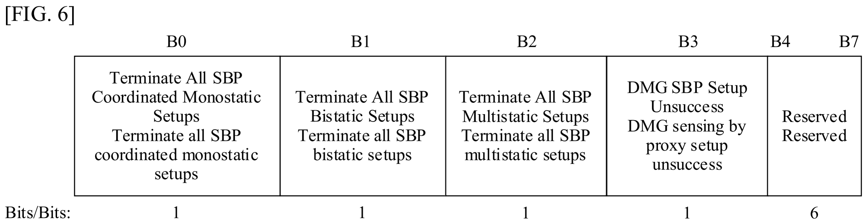

A structure of the DMG SBP Termination Control field is shown in FIG. 6. The DMG SBP Termination Control field includes a DMG sensing by proxy setup unsuccess (DMG SBP Setup Unsuccess) field.

In the conventional technology, when a value of a DMG SBP Setup Unsuccess field is 1, the DMG SBP Parameters element may be present in a DMG SBP termination frame, and the DMG SBP Parameters element in the DMG SBP termination frame carries only a DMG Number of Sensing Responders field, to indicate a number of DMG sensing responders suggested by the SBP responder. However, such a parameter carrying manner has a limited information amount.

It may be understood that, for meanings of fields that are not described in FIG. 6, refer to an existing standard, for example, the 802.11bf standard. Details are not described herein.

The following briefly describes an access point (AP) and a non-access point station (non-AP STA) in this application.

In this specification, the non-access point station (non-AP STA) may also be referred to as a station (station, STA) for short, and the two may be used interchangeably.

The access point (for example, the AP in FIG. 1) is an apparatus having a wireless communication function, supports communication by using a WLAN protocol, has a function of communicating with another device (for example, a station or another access point) in a WLAN network, and certainly may further have a function of communicating with another device. In a WLAN system, the access point may be referred to as an access point station (access point station, AP STA). The apparatus having the wireless communication function may be an entire device, or may be a chip or processing system installed in an entire device. A device in which the chip or the processing system is installed may implement methods and functions in embodiments of this application under control of the chip or the processing system. The AP in embodiments of this application is an apparatus that provides a service for the STA, and may support the 802.11 series protocols. For example, the AP may be a communication entity, for example, a communication server, a router, a switch, or a bridge. The AP may include various forms of macro base stations, micro base stations, relay stations, and the like. Certainly, the AP may alternatively be a chip or a processing system in these various forms of devices, to implement the methods and the functions in embodiments of this application.

The station (for example, any non-AP STA in FIG. 1) is an apparatus having a wireless communication function, supports communication by using a WLAN protocol, and has a capability of communicating with another station or access point in a WLAN network. In the WLAN system, the station may be referred to as a non-access point station (non-access point station, non-AP STA). For example, the STA is any user communication device that allows users to communicate with an AP and further communicate with a WLAN. The apparatus having the wireless communication function may be an entire device, or may be a chip or processing system installed in an entire device. A device in which the chip or the processing system is installed may implement the methods and the functions in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile personal computer, UMPC), a handheld computer, a netbook, a personal digital assistant (personal digital assistant, PDA), or a mobile phone. Alternatively, the STA may be an internet of things node in the internet of things, a vehicle-mounted communication apparatus in the internet of vehicles, an entertainment device, a game device or system, a global positioning system device, or the like. Alternatively, the STA may be a chip and a processing system in the foregoing terminals.

The WLAN system can provide high-speed and low-latency transmission. With continuous evolution of WLAN application scenarios, the WLAN system is to be applicable to more scenarios or industries, for example, the internet of things industry, the internet of vehicles industry, the banking industry, enterprise offices, exhibition halls or stadiums, concert halls, hotel rooms, dormitories, wards, classrooms, supermarkets, squares, streets, production workshops, and warehouses. Certainly, a device (for example, an access point or a station) that supports WLAN communication may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, a wearable device such as augmented reality (augmented reality, AR) or virtual reality (virtual reality, VR)), a smart device in smart office (for example, a printer, a projector, a loudspeaker, or a stereo), an internet of vehicle device in the internet of vehicles, infrastructure in daily life scenarios (for example, a vending machine, a self-service navigation station of a supermarket, a self-service cash register device, or a self-service ordering machine), a device in a large sports and music venue, or the like. Specific forms of the station and the access point are not limited in embodiments of this application, and are merely examples for description herein.

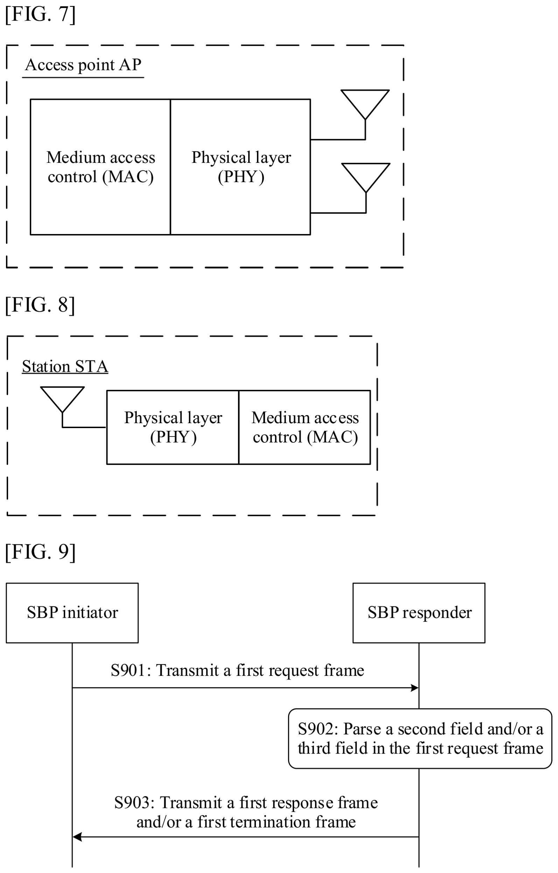

It should be understood that the 802.11 standard focuses on a physical layer (physical layer, PHY) and a medium access control (medium access control, MAC) layer. In an example, FIG. 7 is a diagram of a structure of an access point according to an embodiment of this application. The AP may be a multi-antenna/multi-radio frequency AP, or may be a single-antenna/single-radio frequency AP. The antenna/radio frequency is used to transmit/receive a data packet (the data packet in this specification may also be referred to as a physical layer protocol data unit (PHY protocol data unit, PPDU)). In an implementation, an antenna part or a radio frequency part of the AP may be separated from a main body of the AP, that is, may be remotely disposed. In FIG. 7, the AP may include a physical layer processing circuit and a medium access control processing circuit. The physical layer processing circuit may be configured to process a physical layer signal, and the MAC layer processing circuit may be configured to process a MAC layer signal. In another example, FIG. 8 is a diagram of a structure of a station according to an embodiment of this application. FIG. 8 is a diagram of a structure of a single-antenna/single-radio frequency STA. In an actual scenario, the STA may alternatively be a multi-antenna/multi-radio frequency STA, and may be a device with more than two antennas. The antenna/radio frequency is used to transmit/receive a data packet. In an implementation, an antenna part or a radio frequency part of the STA may be separated from a main body of the STA, that is, may be remotely disposed. In FIG. 8, the STA may include a PHY processing circuit and a MAC processing circuit. The physical layer processing circuit may be configured to process a physical layer signal, and the MAC layer processing circuit may be configured to process a MAC layer signal.

The following describes in detail the technical solutions provided in this application with reference to more accompanying drawings.

In this application, unless otherwise specified, for same or similar parts of embodiments or implementations, refer to each other. In embodiments of this application and the implementations/implementation methods/implementable methods in embodiments, unless otherwise specified or there is a logical conflict, terms and/or descriptions are consistent and may be mutually referenced between different embodiments and between the implementations/implementation methods/implementable methods in embodiments. Technical features in different embodiments and the implementations/implementation methods/implementable methods in embodiments may be combined to form a new embodiment, implementation, implementation method, or implementable method based on an internal logical relationship thereof. The following implementations of this application are not intended to limit the protection scope of this application.

It can be learned from the foregoing explanation of the frame structures of the action fields in the SBP request frame that, when the value of the Mandatory Preferred Responder field in the SBP request frame is 1, that is, when the Mandatory Preferred Responder field indicates that these preferred (sensing) responders are mandatory, the SBP responder can set up subsequent sensing sessions with only preferred sensing responders (that is, preferred sensing responders corresponding to all MAC addresses in the Sensing Responder Addresses field). Once a preferred sensing responder cannot participate in sensing, this SBP procedure fails. For example, it is assumed that a value of a Number of Sensing Responders in the SBP request frame is N (that is, the SBP initiator requests the SBP responder to set up sensing sessions with N sensing responders), and a value of a Number of Preferred Responders in the SBP request frame is also N (that is, the SBP request frame carries MAC addresses of N preferred (sensing) responders, which are respectively a MAC address 1, a MAC address 2, ..., and a MAC address N). If a preferred sensing responder corresponding to the MAC address 1 cannot participate in sensing, this SBP procedure fails.

In addition, in an existing SBP response frame, when a Status Code is SUCCESS, and a value of a Preferred Responder List field in a corresponding SBP request frame is 1 (that is, the SBP request frame carries a preferred sensing responder list and a MAC address), the Preferred Responder List field is set to 1, and a Sensing Responder Addresses field and a Sensing Responder IDs field are carried in the SBP response frame. However, an SBP responder may notify an SBP initiator of a MAC address of a sensing responder that is unknown to the SBP initiator, that is, privacy leakage occurs. Optionally, in the conventional technology, when a Status Code in an SBP response frame is not SUCCESS, an SBP Parameters element in the SBP response frame carries only a Number of Sensing Responders field, to indicate a number of sensing responders suggested by an SBP responder. However, such a parameter carrying manner has a limited information amount.

In view of this, embodiments of this application provide a communication method, which may be applied to the sensing by proxy procedure shown in FIG. 1. According to the method, a rule for setting a related field in an SBP procedure is adjusted and optimized, thereby helping improve sensing performance of SBP.

It should be noted that a name of a message, a name of each parameter/field in the message, or the like described in this application is merely an example, and may have another name in specific implementation. This is not specifically limited in embodiments of this application.

The following describes in detail the communication method and a communication apparatus provided in this application.

It may be understood that a sensing by proxy initiator in embodiments of this application may be the non-AP STA 1 shown in FIG. 1, and a sensing by proxy responder in embodiments of this application may be the AP shown in FIG. 1. A sensing responder in embodiments of this application includes but is not limited to the non-AP STA 2 and the non-AP STA 3 shown in FIG. 1. The sensing by proxy initiator, the sensing by proxy responder, and the sensing responder in embodiments of this application may all support a WLAN sensing protocol, for example, 802.11bf or a next-generation protocol of 802.11bf.

### Embodiment 1

It should be noted that, as described above, in the conventional technology, if a value of a Mandatory Preferred Responder field is 1, a Number of Sensing Responders field and a Mandatory Number of Responders field are reserved fields. However, flexibility of an SBP procedure is poor, and a success rate of the SBP procedure is low. Based on this, in this embodiment of this application, a rule for setting a related field in an SBP request (SBP Request) frame is adjusted and optimized, so that when a value of a Mandatory Preferred Responder field is 1 (in this case, that a Preferred Responder List field in the SBP request frame is 1 indicates that the SBP request frame carries a preferred sensing responder list, and a Number of Preferred Responders indicates a number of preferred sensing responders that are carried), a Number of Sensing Responders field and a Mandatory Number of Responders field are not necessarily reserved. This can enhance flexibility of an SBP procedure and improve a success probability of the SBP procedure on the basis of compatibility with an existing rule, thereby helping improve sensing performance of SBP.

FIG. 9 is a schematic flowchart of a communication method according to an embodiment of this application. As shown in FIG. 9, the communication method includes the following steps S901 to S903. It should be noted that, FIG. 9 is a schematic flowchart of a method embodiment of this application, and shows detailed communication steps or operations of the method. However, these steps or operations are merely examples, and other operations or variations of the operations in FIG. 9 may be further performed in this embodiment of this application. In addition, the steps in FIG. 9 may be performed in an order different from that presented in FIG. 9, and not all the operations in FIG. 9 may be necessarily performed. Specifically:
S901: An SBP initiator transmits a first request frame to an SBP responder. Correspondingly, the SBP responder receives the first request frame from the SBP initiator.

In some feasible implementations, when a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by the SBP initiator. The third field indicates whether a number of sensing responders is mandatory, or the third field indicates whether the number of sensing responders requested by the SBP initiator is mandatory, or the third field indicates whether the number of sensing responders indicated by the second field is mandatory. Optionally, when the third field indicates that the number of sensing responders is mandatory, it indicates that the SBP initiator only accepts sensing sessions with this number of sensing responders; or when the third field indicates that the number of sensing responders is not mandatory, it indicates that the SBP initiator can accept sensing sessions with less than this number of sensing responders. For example, when a value of the third field in the first request frame is 1, it may indicate that the number of sensing responders is mandatory; and when the value of the third field in the first request frame is 0, it may indicate that the number of sensing responders is optional or not mandatory.

Optionally, when the value of the first field is 1, it may indicate that preferred sensing responders in the first preferred sensing responder list carried in the first request frame are mandatory, that is, the SBP initiator accepts only sensing sessions set up with these preferred sensing responders; and when the value of the first field is 0, it may indicate that the preferred sensing responders in the first preferred sensing responder list carried in the first request frame are optional, that is, the SBP initiator may accept a sensing session set up with a sensing responder that is not a preferred sensing responder.

Optionally, the first request frame may further include a fourth field, and the fourth field carries address information of one or more (preferred) sensing responders. For example, the address information may be a MAC address.

Optionally, the first request frame may further include a fourteenth field, and the fourteenth field indicates whether the first request frame carries the preferred sensing responder list. For example, when a value of the fourteenth field in the first request frame is 1, it indicates that the first request frame carries the preferred sensing responder list (or the first request frame includes address information of one or more preferred sensing responders, or the first request frame includes the fourth field, or the fourth field is present in the first request frame); and when the value of the fourteenth field in the first request frame is 0, it indicates that the first request frame does not carry the preferred sensing responder list (or the first request frame does not include address information of a preferred sensing responder, or the first request frame does not include the fourth field, or the fourth field is not present in the first request frame).

Optionally, the first request frame may further include a fifteenth field, and the fifteenth field indicates a number of preferred sensing responders in the preferred sensing responder list carried in the first request frame, or the fifteenth field indicates a number of pieces of address information of preferred sensing responders included in the fourth field. For example, in this embodiment of this application, an example in which the value of the fourteenth field is 1 and the fifteenth field indicates that the number of preferred sensing responders in the preferred sensing responder list carried in the first request frame is N may be used for description. In other words, the number of preferred sensing responders in the preferred sensing responder list carried in the first request frame is N, where N is an integer greater than 0.

In a first possible implementation, that the second field and/or the third field in the first request frame are/is not reserved fields/a reserved field may be understood as follows: The second field indicates that the number of sensing responders requested by the SBP initiator is 0 or M (M is an integer greater than 0, and M is equal to N herein), and the value of the third field indicates whether the number of sensing responders is mandatory or optional. Alternatively, the second field indicates that the number of sensing responders requested by the SBP initiator is 0 or M (M is equal to N herein), and the third field is a reserved field. In other words, a value of the second field may be 0 or M, and the value of the third field may be 1 or 0, or the third field is a reserved field. Various cases may be combined with each other. For example, the second field indicates that the number of sensing responders requested by the SBP initiator is 0, and the value of the third field indicates that the number of sensing responders is mandatory (for example, the value of the third field is 1). For another example, the second field indicates that the number of sensing responders requested by the SBP initiator is 0, and the value of the third field indicates that the number of sensing responders is optional (for example, the value of the third field is 0). For another example, the second field indicates that the number of sensing responders requested by the SBP initiator is 0, and the third field is a reserved field. For another example, the second field indicates that the number of sensing responders requested by the SBP initiator is M, and the value of the third field indicates that the number of sensing responders is mandatory (for example, the value of the third field is 1). For another example, the second field indicates that the number of sensing responders requested by the SBP initiator is M, and the value of the third field indicates that the number of sensing responders is optional (for example, the value of the third field is 0). For another example, the second field indicates that the number of sensing responders requested by the SBP initiator is M, and the third field is a reserved field.

Optionally, in the first possible implementation, the SBP responder may determine M sensing responders based on the first request frame. The M sensing responders are M preferred sensing responders in N preferred sensing responders included in the preferred sensing responder list carried in the first request frame, and M is equal to N. In other words, the SBP responder may determine the N preferred sensing responders in the preferred sensing responder list carried in the first request frame (that is, all the preferred sensing responders in the preferred sensing responder list carried in the first request frame) as sensing responders requested by the SBP initiator.

In a second possible implementation, that the second field and the third field in the first request frame are not reserved fields may be understood as follows: The second field indicates that the number of sensing responders requested by the SBP initiator is M, and the value of the third field indicates that the number of sensing responders is mandatory (for example, the value of the first field is 1).

Optionally, in the second possible implementation, the SBP responder may determine M sensing responders based on the first request frame. When M is a positive integer less than or equal to N, the M sensing responders are M preferred sensing responders in N preferred sensing responders included in the preferred sensing responder list carried in the first request frame. When M is a positive integer greater than or equal to N, the M sensing responders include N preferred sensing responders in the preferred sensing responder list carried in the first request frame, and (M-N) sensing responders that are not included in the preferred sensing responder list carried in the first request frame. In other words, when M is a positive integer less than or equal to N, the SBP responder may select, from the N preferred sensing responders included in the preferred sensing responder list carried in the first request frame, the M preferred sensing responders as the M sensing responders requested by the SBP initiator; or when M is a positive integer greater than or equal to N, the N preferred sensing responders in the preferred sensing responder list carried in the first request frame are mandatory sensing responders, and the (M-N) sensing responders selected from outside the preferred sensing responder list carried in the first request frame and the N preferred sensing responders need to be used as the M sensing responders requested by the SBP initiator.

In a third possible implementation, that the second field and the third field in the first request frame are not reserved fields may be understood as follows: The second field indicates that the number of sensing responders requested by the SBP initiator is M, and the value of the third field indicates that the number of sensing responders is optional.

Optionally, in the third possible implementation, the SBP responder may determine a maximum of M sensing responders based on the first request frame. When M is a positive integer less than or equal to N, the M sensing responders are M preferred sensing responders in N preferred sensing responders included in the preferred sensing responder list carried in the first request frame. When M is a positive integer greater than or equal to N, the M sensing responders include N preferred sensing responders in the preferred sensing responder list carried in the first request frame, and (M-N) sensing responders that are not included in the preferred sensing responder list carried in the first request frame. In other words, when M is a positive integer less than or equal to N, the SBP responder may select a maximum of M preferred sensing responders from the N preferred sensing responders included in the preferred sensing responder list carried in the first request frame as the M sensing responders requested by the SBP initiator. When M is a positive integer greater than or equal to N, the SBP responder may select a maximum of M sensing responders in total from the N preferred sensing responders in the preferred sensing responder list carried in the first request frame and sensing responders outside the preferred sensing responder list carried in the first request frame, for use by the SBP responder during a sensing setup.

It should be noted that the first request frame in this application may be an SBP request frame, or the first request frame may be a DMG SBP request frame. For example, when the first request frame is an SBP request frame, the first field may also be referred to as a Mandatory Preferred Responder field, the second field may also be referred to as a Number of Sensing Responders field, the third field may also be referred to as a Mandatory Number of Responders field, the fourth field may also be referred to as a Sensing Responder Addresses field, the fourteenth field may also be referred to as a Preferred Responder List field, and the fifteenth field may also be referred to as a Number of Preferred Responders field. For another example, when the first request frame is a DMG SBP request frame, the first field may also be referred to as a DMG Mandatory Preferred Responder field, the second field may also be referred to as a DMG Number of Sensing Responders field, the third field may also be referred to as a DMG Mandatory Number of Responders field, the fourth field may also be referred to as a DMG Sensing Responder Addresses field, the fourteenth field may also be referred to as a DMG Preferred Responder List field, and the fifteenth field may also be referred to as a DMG Number of Preferred Responders field.

It should be noted that names of the fields in this embodiment of this application are merely examples, and may be other names in specific implementation. This is not specifically limited in this embodiment of this application.

For ease of understanding, in this embodiment of this application, an example in which the first request frame is an SBP request frame is mainly used for description. The Number of Sensing Responders field in the SBP request frame indicates a number of sensing responders with which the SBP initiator requests the SBP responder to set up sensing sessions. In this embodiment of this application, an example in which the Number of Sensing Responders field indicates the SBP initiator to request the SBP responder to set up sensing sessions with M sensing responders is mainly used for description. If a value of the Mandatory Number of Responders field in the SBP request frame is 1, it indicates that the requested number of sensing responders (that is, the number of sensing responders indicated by the Number of Sensing Responders field) is mandatory, that is, the SBP initiator accepts only sensing sessions with this number of sensing responders (that is, the SBP responder needs to set up sensing sessions with sensing responders whose number is the same as the required number). If the value of the Mandatory Number of Responders field in the SBP request frame is 0, it indicates that the requested number of sensing responders is not mandatory, that is, the SBP initiator may accept sensing sessions with less than this number of sensing responders (that is, the SBP responder may set up sensing sessions with sensing responders whose number is less than this number). When the Preferred Responder List field in the SBP request frame is 1, it indicates that the SBP request frame carries the preferred sensing responder list, or an SBP Parameters element in the SBP request frame includes the Sensing Responder Addresses field, and the Sensing Responder Addresses field carries MAC addresses of one or more preferred sensing responders. When the Preferred Responder List field in the SBP request frame is 0, it indicates that the preferred sensing responder list is not carried, or the SBP Parameters element in the SBP request frame does not include the Sensing Responder Addresses field, or the Sensing Responder Addresses field does not include a MAC address of a preferred sensing responder. The Number of Preferred Responders field in the SBP request frame indicates a number of preferred sensing responders included in the preferred sensing responder list, and MAC addresses of these sensing responders are all included in the Sensing Responder Addresses field in the SBP Parameters element. In this embodiment of this application, an example in which the Number of Preferred Responders field indicates that the preferred sensing responder list includes the N preferred sensing responders is used for description.

For ease of understanding, the following mainly uses an example in which the first request frame is an SBP request frame to further explain and describe content that is related to the first request frame and that is described in S901. Based on this, a rule that is used for setting a parameter and that is obtained by optimizing a related field in the SBP request frame in this application may be summarized as the following rule 1 to rule 3:
Rule 1: When a value of the Mandatory Preferred Responder field is 1, and a value indicated by the Number of Sensing Responders field is 0 (in this case, a value of the Mandatory Number of Responders field may be 1 or 0, or the Mandatory Number of Responders field is a reserved field), or when the value of the Mandatory Preferred Responder field is 1, and the value indicated by the Number of Sensing Responders field is the same as a value indicated by the Number of Preferred Responders field (that is, M=N) (in this case, the value of the Mandatory Number of Responders field may be 1 or 0, or the Mandatory Number of Responders field is a reserved field), the SBP responder sets up sensing sessions only with all preferred sensing responders provided by the SBP initiator. It may be understood that the rule 1 may correspond to the foregoing first possible implementation. Optionally, for the rule 1, refer to a summary of L5 in the following Table 4. "Yes" indicates mandatory (or a corresponding value is 1), and "No" indicates optional (or a corresponding value is 0).
Rule 2: When the value of the Mandatory Preferred Responder field is 1, the value indicated by the Number of Sensing Responders field is not 0 (assumed to be M), and the value of the Mandatory Number of Responders field is 1, the SBP responder selects, based on a requirement, an appropriate sensing responder from the preferred sensing responder (assumed to be N) list/out of the preferred sensing responder list to set up a sensing session. It may be understood that the rule 2 may correspond to the foregoing second possible implementation. Optionally, for the rule 2, refer to summaries of L6 and L8 in the following Table 4.

For example, if N≥M, the SBP responder needs to select M sensing responders from the N preferred sensing responders to set up sensing sessions; or if N<M, the SBP responder needs to use all the N preferred sensing responders, and then search for sensing responders other than the preferred sensing responders provided by the SBP initiator, to meet a requirement of a total number M of sensing responders.

In another example, if N>M, the SBP responder needs to select M preferred sensing responders from the N preferred sensing responders to set up sensing sessions; or if N≤M, the SBP responder needs to use all the N preferred sensing responders, and then search for sensing responders other than the preferred sensing responders provided by the SBP initiator, to meet a requirement of a total number M of sensing responders.

In still another example, if N>M, the SBP responder needs to select M preferred sensing responders from the N preferred sensing responders to set up sensing sessions; or if N<M, the SBP responder needs to use all the N preferred sensing responders, and then search for sensing responders other than the preferred sensing responders provided by the SBP initiator, to meet a requirement of a total number M of sensing responders.

Rule 3: When the value of the Mandatory Preferred Responder field is 1, the value indicated by the Number of Sensing Responders field is not 0 (assumed to be M), and the value of the Mandatory Number of Responders field is 0, the SBP responder selects, based on a requirement, an appropriate sensing responder from the preferred sensing responder (assumed to be N) list/out of the preferred sensing responder list to set up a sensing session. The SBP responder selects, based on the requirement, a device from the preferred sensing responders (assumed to be N) to set up a sensing session. It may be understood that the rule 3 may correspond to the foregoing third possible implementation. Optionally, for the rule 3, refer to summaries of L7 and L9 in the following Table 4.

For example, if N≥M, the SBP responder needs to select a maximum of M preferred sensing responders from the N preferred sensing responders to set up sensing sessions; or if N<M, the SBP responder needs to use all the N preferred sensing responders (that is, N is a minimum value of the sensing responders), and then search for a sensing responder other than the preferred sensing responders provided by the SBP initiator, to meet a requirement of a maximum total number M of sensing responders.

In another example, if N>M, the SBP responder needs to select a maximum of M preferred sensing responders from the N preferred sensing responders to set up sensing sessions; or if N≤M, the SBP responder needs to use all the N preferred sensing responders (that is, N is a minimum value of the sensing responders), and then search for a sensing responder other than the preferred sensing responders provided by the SBP initiator, to meet a requirement of a maximum total number M of sensing responders.

In still another example, if N>M, the SBP responder needs to select a maximum of M preferred sensing responders from the N preferred sensing responders to set up sensing sessions; or if N<M, the SBP responder needs to use all the N preferred sensing responders (that is, N is a minimum value of the sensing responders), and then search for a sensing responder other than the preferred sensing responders provided by the SBP initiator, to meet a requirement of a maximum total number M of sensing responders.

Optionally, in some feasible implementations, when the value indicated by the Number of Sensing Responders is not 0 (assumed to be M), and the value of the Mandatory Number of Responders field is 0, the SBP responder selects, based on a requirement, a maximum of M sensing responders to set up sensing sessions. For example, for this implementation, refer to a summary of L1 in the following Table 4.

Optionally, in some feasible implementations, when the value indicated by the Number of Sensing Responders is not 0 (assumed to be M), and the value of the Mandatory Number of Responders field is 1, the SBP responder selects, based on a requirement, M sensing responders to set up sensing sessions. For example, for this implementation, refer to a summary of L2 in the following Table 4.

Optionally, in some feasible implementations, when the value of the Mandatory Preferred Responder field is 0, the value indicated by the Number of Sensing Responders is not 0 (assumed to be M), and the value of the Mandatory Number of Responders field is 0, the SBP responder selects, based on a requirement, a maximum of M sensing responders from the preferred sensing responder (assumed to be N) list/out of the preferred sensing responder list, to set up sensing sessions. Optionally, for this implementation, refer to a summary of L3 in the following Table 4.

Optionally, in some feasible implementations, when the value of the Mandatory Preferred Responder field is 0, the value indicated by the Number of Sensing Responders is not 0 (assumed to be M), and the value of the Mandatory Number of Responders field is 1, the SBP responder selects, based on a requirement, M sensing responders from the preferred sensing responder (assumed to be N) list/out of the preferred sensing responder list, to set up sensing sessions. For example, for this implementation, refer to a summary of L4 in the following Table 4.

**Table 4**

| | **Number of Sensing Responders** | **Mandatory Number of Responders** | **Preferred Responder List** | **Number of Preferred Responders** | **Mandatory Preferred Responder** | **Meaning** |
|---|---|---|---|---|---|---|
| L1 | M | No | 0 | / | / | Select a maximum of M sensing responders |
| L2 | M | Yes | 0 | / | / | Select M sensing responders |
| L3 | M | No | 1 | N | No | Select a maximum of M sensing responders within N preferred sensing responders or outside the N preferred sensing responders |
| L4 | M | Yes | 1 | N | No | Select M sensing responders within N preferred sensing responders or outside the N preferred sensing responders |
| L5 | 0 | Reserved field: Yes; No; | 1 | N | Yes (N=M) | Use all N preferred sensing responders as selected sensing responders |
| | M | | | | | |
| L6 | M | Yes | 1 | N | Yes (N≥M, or N>M) | Select M sensing responders from N preferred sensing responders as sensing responders |
| L7 | M | No | 1 | N | Yes (N≥M, or N>M) | Select a maximum of M sensing responders from N preferred sensing responders as sensing responders |
| L8 | M | Yes | 1 | N | Yes (N<M, or N≤M) | Select M sensing responders, where N preferred sensing responders are mandatory, and remaining sensing responders are selected outside the N preferred sensing responders |
| L9 | M | No | 1 | N | Yes (N<M, or N≤M) | Select a maximum of M sensing responders, where N preferred sensing responders are mandatory, some sensing responders are selected outside the N preferred sensing responders, and a total number is less than or equal to M |

Optionally, in this embodiment of this application, when the SBP responder may select a sensing responder outside the N preferred sensing responders, or when the SBP responder may select a sensing responder outside the preferred sensing responder list carried in the SBP request frame, or when the SBP responder may select a sensing responder that is not included in the preferred sensing responder list carried in the SBP request frame, an SBP responder other than the N preferred sensing responders, or an SBP responder outside the preferred sensing responder list in the SBP request frame, or an SBP responder that is not included in the preferred sensing responder list in the SBP request frame may be determined based on an implementation of the SBP responder. This is not limited in this application.

S902: The SBP responder parses the second field and/or the third field in the first request frame.

Optionally, the SBP responder may set up a sensing session based on the first request frame.

For example, it is assumed that, in the SBP request frame (or MLME-SBP.indication primitive) transmitted by the SBP initiator to the SBP responder, the Number of Sensing Responders field indicates that the number of sensing responders requested by the SBP initiator is 3 (that is, M=3), the value of the Mandatory Number of Responders field is 1, the value of the Preferred Responder List field is 1, the Number of Preferred Responders field indicates that four preferred sensing responders are included (that is, N=4), and the value of the Mandatory Preferred Responder field is 0. In this case, the SBP responder may select to set up sensing measurement sessions with three sensing responders, and the three sensing responders may include two preferred sensing responders in the preferred sensing responder list in the SBP request frame, and one sensing responder outside the preferred sensing responder list in the SBP request frame. For example, it is assumed that MAC addresses carried in the Sensing Responder Addresses field in the SBP request frame are a MAC address 1, a MAC address 2, a MAC address 3, and a MAC address 4, and the MAC address 1, the MAC address 2, the MAC address 3, and the MAC address 4 are respectively MAC addresses corresponding to a sensing responder 1, a sensing responder 2, a sensing responder 3, and a sensing responder 4. In this case, the SBP responder may select to set up sensing measurement sessions with two sensing responders corresponding to the MAC address 1 and the MAC address 2, and a sensing responder corresponding to a MAC address 5. The MAC address 5 is a MAC address of a sensing responder outside the preferred sensing responder list.

For another example, it is assumed that, in the SBP request frame (or MLME-SBP.indication primitive) transmitted by the SBP initiator to the SBP responder, the Number of Sensing Responders indicates that the number of sensing responders requested by the SBP initiator is 3 (that is, M=3), the value of the Mandatory Number of Responders field is 1, the value of the Preferred Responder List field is 1, the Number of Preferred Responders field indicates that four preferred sensing responders are included (that is, N=4), and the value of the Mandatory Preferred Responder field is 1. In this case, the SBP responder may select to set up sensing measurement sessions with three sensing responders, and the three sensing responders are three preferred sensing responders in the SBP request frame. For example, it is assumed that MAC addresses carried in the Sensing Responder Addresses field in the SBP request frame are a MAC address 1, a MAC address 2, a MAC address 3, and a MAC address 4, and the MAC address 1, the MAC address 2, the MAC address 3, and the MAC address 4 are respectively MAC addresses corresponding to a sensing responder 1, a sensing responder 2, a sensing responder 3, and a sensing responder 4. In this case, the SBP responder may select to set up sensing sessions with three sensing responders corresponding to the MAC address 1, the MAC address 2, and the MAC address 3.

For still another example, it is assumed that, in the SBP request frame (or MLME-SBP.indication primitive) transmitted by the SBP initiator to the SBP responder, the Number of Sensing Responders indicates that the number of sensing responders requested by the SBP initiator is 3 (that is, M=3), the Mandatory Number of Responders is 0, the Preferred Responder List field is 1, the Number of Preferred Responders field indicates that four preferred sensing responders are included (that is, N=4), and the value of the Mandatory Preferred Responder field is 0. In this case, the SBP responder may select to set up sensing sessions with a maximum of three sensing responders. For example, the SBP responder may select to set up sensing sessions with two sensing responders. For example, it is assumed that MAC addresses carried in the Sensing Responder Addresses field in the SBP request frame are a MAC address 1, a MAC address 2, a MAC address 3, and a MAC address 4, and the MAC address 1, the MAC address 2, the MAC address 3, and the MAC address 4 are respectively MAC addresses corresponding to a sensing responder 1, a sensing responder 2, a sensing responder 3, and a sensing responder 4. In this case, the SBP responder may select to set up sensing sessions with a sensing responder corresponding to the MAC address 1 and a sensing responder corresponding to the MAC address 2, or the SBP responder may select to set up a sensing session with the sensing responder corresponding to the MAC address 1 and a sensing responder corresponding to a MAC address 5. The MAC address 5 is a MAC address of a sensing responder outside the preferred sensing responder list.

In the conventional technology, it is defined as follows: When the value of the first field in the first request frame indicates that the preferred sensing responder in the preferred sensing responder list carried in the first request frame is mandatory, the second field and the third field in the first request frame are reserved fields. It should be noted that, different from the conventional technology, in this application, a rule for setting a related field in an SBP procedure is adjusted and optimized. To be specific, in steps S901 and S902 in this embodiment of this application, it is defined as follows: When the value of the first field in the first request frame indicates that the preferred sensing responder in the preferred sensing responder list carried in the first request frame is mandatory, the second field and/or the third field in the first request frame are/is not reserved fields/a reserved field. Based on the implementations of steps S901 and S902 in this embodiment of this application, exchange flexibility of the SBP procedure can be improved, thereby helping improve sensing performance of SBP.

Optionally, Embodiment 1 may further include one or more of the following steps:
S903: The SBP responder transmits a first response frame and/or a first termination frame to the SBP initiator. Correspondingly, the SBP initiator receives the first response frame and/or the first termination frame from the SBP responder.

In some feasible implementations, when the first response frame indicates to accept the first request frame, address information of a sensing responder included in the first response frame is a subset of address information of a sensing responder included in the fourth field in the first request frame. For example, when a Status Code in the first response frame is SUCCESS (SUCCESS), it indicates that the first response frame indicates to accept the first request frame. Optionally, the address information of the sensing responder included in the first response frame may be carried in a fifth field. In this application, that the address information of the sensing responder included in the first response frame is the subset of the address information of the sensing responder included in the fourth field in the first request frame may be understood as follows: The address information of the sensing responder included in the first response frame is a part or all of the address information of the sensing responder included in the fourth field in the first request frame. In other words, a number of pieces of address information of sensing responders included in the first response frame is less than or equal to a number of pieces of address information of sensing responders included in the fourth field in the first request frame.

Optionally, in some feasible implementations, when the first response frame indicates to reject the first request frame, the first response frame may include a number of sensing responders suggested by the SBP responder and address information of a sensing responder suggested by the SBP responder. For example, when the Status Code in the first response frame is REQUEST_DECLINED (REQUEST_DECLINED) or REJECTED_WITH_SUGGESTED_CHANGES (REJECTED_WITH_SUGGESTED_CHANGES), it indicates that the first response frame indicates to reject the first request frame. Optionally, a number that is of sensing responders suggested/planned to be set up/responded by the SBP responder and that is included in the first response frame may be carried in a thirteenth field in the first response frame, and the address information of the sensing responder included in the first response frame may be carried in the fifth field in the first response frame. Optionally, the address information of the sensing responder included in the fifth field may be a subset of the address information of the sensing responder included in the fourth field in the first request frame. Optionally, when the first response frame indicates to reject the first request frame, the first response frame further includes one or more of the following fields: an eighth field and a ninth field. The eighth field indicates whether the first response frame carries a preferred sensing responder list, and the ninth field indicates a number of preferred sensing responders in the preferred sensing responder list carried in the first response frame.

Optionally, when the first response frame indicates to accept the first request frame, or when the first response frame indicates to reject the first request frame, the first response frame may further include a seventh field, and the seventh field carries identity information of a sensing responder. Optionally, a number of pieces of address information included in the fifth field in the first response frame may be less than or equal to a number of pieces of identity information included in the seventh field in the first response frame.

Optionally, when the number of pieces of address information included in the fifth field in the first response frame is equal to the number of pieces of identity information included in the seventh field in the first response frame, a value indicated by the ninth field in the first response frame may be equal to the number of pieces of address information included in the fifth field in the first response frame and/or the number of pieces of identity information included in the seventh field in the first response frame. Optionally, when the number of pieces of address information included in the fifth field in the first response frame is equal to the number of pieces of identity information included in the seventh field in the first response frame, a value indicated by the thirteenth field in the first response frame may be equal to the number of pieces of address information included in the fifth field in the first response frame and/or the number of pieces of identity information included in the seventh field in the first response frame.

Optionally, when the number of pieces of address information included in the fifth field in the first response frame is less than the number of pieces of identity information included in the seventh field in the first response frame, the value indicated by the ninth field in the first response frame may be equal to the number of pieces of address information included in the fifth field in the first response frame. Optionally, when the number of pieces of address information included in the fifth field in the first response frame is less than the number of pieces of identity information included in the seventh field in the first response frame, the value indicated by the thirteenth field in the first response frame may be equal to the number of pieces of identity information included in the seventh field in the first response frame. Optionally, when the number of pieces of address information included in the fifth field in the first response frame is less than the number of pieces of identity information included in the seventh field in the first response frame, both the value indicated by the ninth field and the value indicated by the thirteenth field in the first response frame may be equal to the number of pieces of address information included in the fifth field in the first response frame, and the number of pieces of identity information included in the first response frame may not be indicated in the first response frame.

Optionally, when the number of pieces of address information included in the fifth field in the first response frame is equal to the number of pieces of identity information included in the seventh field in the first response frame, the address information in the fifth field may one-to-one correspond to the identity information in the seventh field. Herein, one-to-one correspondence may be understood as that an arrangement manner/arrangement order/occurrence order of the ID information included in the seventh field in the first response frame is consistent with that of the address information in the fifth field, and ID information and a MAC address that are in the two fields respectively and that have a same arrangement location/occurrence order correspond to a same sensing responder.

For example, it is assumed that a MAC address and ID information that correspond to a sensing responder 1 are respectively a MAC address 1 and ID information 1, a MAC address and ID information that correspond to a sensing responder 2 are respectively a MAC address 2 and ID information 2, a MAC address and ID information that correspond to a sensing responder 3 are respectively a MAC address 3 and ID information 3, and a MAC address and ID information that correspond to a sensing responder 4 are respectively a MAC address 4 and ID information 4. MAC addresses included in the fourth field in the first request frame are respectively the MAC address 1, the MAC address 2, the MAC address 3, and the MAC address 4. It is assumed that the number of pieces of address information included in the fifth field in the first response frame is equal to the number of pieces of identity information included in the seventh field in the first response frame. For example, the number of pieces of address information included in the fifth field is 3, and the number of pieces of identity information included in the seventh field is 3. In this case, address information included in the fifth field in the first response frame may be the MAC address 1, the MAC address 2, and the MAC address 3, and identity information included in the seventh field in the first response frame may be the ID information 1, the ID information 2, and the ID information 3.

Optionally, when the number of pieces of address information included in the fifth field in the first response frame is less than the number of pieces of identity information included in the seventh field in the first response frame, some pieces of identity information in the seventh field may one-to-one correspond to address information in the fifth field.

For example, it is assumed that a MAC address and ID information that correspond to a sensing responder 1 are respectively a MAC address 1 and ID information 1, a MAC address and ID information that correspond to a sensing responder 2 are respectively a MAC address 2 and ID information 2, a MAC address and ID information that correspond to a sensing responder 3 are respectively a MAC address 3 and ID information 3, a MAC address and ID information that correspond to a sensing responder 4 are respectively a MAC address 4 and ID information 4, and a MAC address and ID information that correspond to a sensing responder 5 are respectively a MAC address 5 and ID information 5. MAC addresses included in the fourth field in the first request frame are respectively the MAC address 1, the MAC address 2, the MAC address 3, and the MAC address 4. Herein, the MAC address 5 is a MAC address of a sensing responder outside the preferred sensing responder list in the first request frame. It is assumed that the number of pieces of address information included in the fifth field in the first response frame is less than the number of pieces of identity information included in the seventh field in the first response frame, for example, the number of pieces of address information included in the fifth field is 3, and the number of pieces of identity information included in the seventh field is 4. In this case, the address information included in the fifth field in the first response frame may be the MAC address 1, the MAC address 2, and the MAC address 3, and the identity information included in the seventh field in the first response frame may be the ID information 1, the ID information 2, the ID information 3, and the ID information 5.

Optionally, in some feasible implementations, when the first termination frame indicates that a termination reason is that an SBP condition is not met, the first termination frame may include a sixteenth field and address information of a sensing responder, and the sixteenth field indicates a number of (suggested) sensing responders. Optionally, the address information of the sensing termination end included in the first termination frame may be carried in a sixth field. Optionally, the address information of the sensing termination end included in the sixth field may be a subset of the address information of the sensing termination end included in the fourth field in the first request frame.

Optionally, when the first termination frame indicates that the termination reason is that the SBP condition is not met, the first termination frame further includes one or more of the following fields: a tenth field, an eleventh field, and a twelfth field. The tenth field carries identity information of a sensing responder, the eleventh field indicates whether the first termination frame carries a preferred sensing responder list, and the twelfth field indicates a number of preferred sensing responders in the preferred sensing responder list carried in the first termination frame.

Optionally, when the first termination frame includes the tenth field, a number of pieces of address information included in the sixth field in the first termination frame may be less than or equal to a number of pieces of identity information included in the tenth field in the first termination frame. Optionally, when the number of pieces of address information included in the sixth field in the first termination frame is equal to the number of pieces of identity information included in the tenth field in the first termination frame, the address information in the sixth field may one-to-one correspond to the identity information in the tenth field. Optionally, when the number of pieces of address information included in the sixth field in the first termination frame is less than the number of pieces of identity information included in the tenth field in the first termination frame, some pieces of identity information in the tenth field may one-to-one correspond to the address information in the sixth field.

It should be noted that the first response frame in this application may be an SBP response frame, or the first response frame may be a DMG SBP response frame. The first termination frame in this application may be an SBP termination frame, or the first termination frame may be a DMG SBP termination frame. For example, in this embodiment of this application, the fourth field, the fifth field, and the sixth field may be fields that are in different frames and that carry same type information. For example, the fourth field, the fifth field, and the sixth field may be fields that are in the first request frame, the first response frame, and the first termination frame respectively and that carry address information of a sensing responder. In an implementation, fields that are in different frames and that carry same type information may have a same name. For example, when the first request frame is an SBP request frame, the first response frame is an SBP response frame, and the first termination frame is an SBP termination frame, the fourth field, the fifth field, and the sixth field may all be referred to as Sensing Responder Addresses fields. When the first request frame is a DMG SBP request frame, the first response frame is a DMG SBP response frame, and the first termination frame is a DMG SBP termination frame, the fourth field, the fifth field, and the sixth field may all be referred to as DMG Sensing Responder Addresses fields. Optionally, in another implementation, fields that are in different frames and that carry same type information may have different names. For example, when the first request frame is an SBP request frame, the first response frame is an SBP response frame, and the first termination frame is an SBP termination frame, the fourth field, the fifth field, and the sixth field may be respectively referred to as a Sensing Responder Addresses 1 field, a Sensing Responder Addresses 2 field, and a Sensing Responder Addresses 3 field.

Optionally, the seventh field and the tenth field may be fields that are in different frames and that carry same type information. For example, the seventh field and the tenth field may be fields that are respectively in the first response frame and the first termination frame and that carry identity information of a sensing responder. For example, when the first response frame is an SBP response frame, and the first termination frame is an SBP termination frame, both the seventh field and the tenth field may be referred to as Sensing Responder IDs fields.

Optionally, the fourteenth field, the eighth field, and the eleventh field may be fields that are in different frames and that carry same type information. For example, the fourteenth field, the eighth field, and the eleventh field may be respectively in fields that are in the first request frame, the first response frame, and the first termination frame respectively and that indicate whether a corresponding frame carries a preferred sensing responder list. For example, when the first request frame is an SBP request frame, the first response frame is an SBP response frame, and the first termination frame is an SBP termination frame, the fourteenth field, the eighth field, and the eleventh field may all be referred to as Preferred Responder List fields.

Optionally, the fifteenth field, the ninth field, and the twelfth field may be fields that are in different frames and that carry same type information. For example, the fifteenth field, the ninth field, and the twelfth field may be fields that are in the first request frame, the first response frame, and the first termination frame respectively and that indicate a number of preferred sensing responders in a preferred sensing responder list carried in a corresponding frame. For example, when the first request frame is an SBP request frame, the first response frame is an SBP response frame, and the first termination frame is an SBP termination frame, the fifteenth field, the ninth field, and the twelfth field may all be referred to as Number of Preferred Responders fields.

Optionally, the second field, the thirteenth field, and the sixteenth field may be fields that are in different frames and that carry same type information. For example, the second field, the thirteenth field, and the sixteenth field may be fields that are in the first request frame, the first response frame, and the first termination frame respectively and that indicate a number of sensing responders. For example, when the first request frame is an SBP request frame, the first response frame is an SBP response frame, and the first termination frame is an SBP termination frame, the second field, the thirteenth field, and the sixteenth field may all be referred to as Number of Sensing Responders fields.

It should be noted that names of the fields in this embodiment of this application are merely examples, and may be other names in specific implementation. This is not specifically limited in this embodiment of this application.

For ease of understanding, the following mainly uses an example in which the first response frame is an SBP response frame to further explain and describe content that is related to the first response frame when the first response frame indicates to accept the first request frame and that is described in S903. In this application, when a Status Code in the SBP response frame (or MLME-SBP.response primitive) is SUCCESS, and the Preferred Responder List field is set to 1, rules for carrying parameters of the Sensing Responder IDs field and the Sensing Responder Addresses field in the SBP response frame are refined and adjusted. An added rule is as follows:

A number of MAC addresses included in the Sensing Responder Addresses field in the SBP response frame (or MLME-SBP.response primitive) is less than or equal to a number of MAC addresses included in the Sensing Responder Addresses field in the SBP request frame (or MLME-SBP.indication primitive) (in this case, the SBP responder may select some of preferred sensing responders provided by the SBP initiator as final sensing responders, and exchange, to the SBP initiator through the SBP response frame, address information and ID information that are of the some sensing responders). In other words, a MAC address included in the Sensing Responder Addresses field in the SBP response frame (or MLME-SBP.response primitive) is a subset of a MAC address included in the Sensing Responder Addresses field in the SBP request frame (or MLME-SBP.indication primitive).

Optionally, in a case 1, a number of AIDs/USIDs included in the Sensing Responder IDs field in the SBP response frame (or MLME-SBP.response primitive) is the same as the number of MAC addresses included in the Sensing Responder Addresses field in the SBP response frame (or MLME-SBP.response primitive). Optionally, in the case 1, a value indicated by the Number of Preferred Responders field in the SBP response frame may be equal to the number of MAC addresses included in the Sensing Responder Addresses field in the SBP response frame and/or the number of AIDs/USIDs included in the Sensing Responder IDs field in the SBP response frame. Optionally, in the case 1, a value indicated by the Number of Sensing Responders field in the SBP response frame may be equal to the number of MAC addresses included in the Sensing Responder Addresses field in the SBP response frame and/or the number of AIDs/USIDs included in the Sensing Responder IDs field in the SBP response frame.

Optionally, in a case 2, the number of AIDs/USIDs included in the Sensing Responder IDs field in the SBP response frame (or MLME-SBP.response primitive) is greater than the number of MAC addresses included in the Sensing Responder Addresses field in the SBP response frame (or MLME-SBP.response primitive). Optionally, in the case 2, a value indicated by the Number of Preferred Responders field in the SBP response frame may be equal to the number of MAC addresses included in the Sensing Responder Addresses field in the SBP response frame. Optionally, in the case 2, a value indicated by the Number of Sensing Responders field in the SBP response frame may be equal to the number of AIDs/USIDs included in the Sensing Responder IDs field in the SBP response frame. Optionally, in the case 2, both a value indicated by the Number of Preferred Responders field and a value indicated by the Number of Sensing Responders field in the SBP response frame may be equal to the number of MAC addresses included in the Sensing Responder Addresses field in the SBP response frame, and the number of AIDs/USIDs included in the SBP response frame may not be indicated in the SBP response frame.

Optionally, when the number of AIDs/USIDs included in the Sensing Responder IDs field in the SBP response frame (or MLME-SBP.response primitive) is equal to the number of MAC addresses included in the Sensing Responder Addresses field in the SBP response frame (or MLME-SBP.response primitive), AIDs/USIDs included in the Sensing Responder IDs field in the SBP response frame (or MLME-SBP.response primitive) may one-to-one correspond to MAC addresses included in the Sensing Responder Addresses field in the SBP response frame (or MLME-SBP.response primitive).

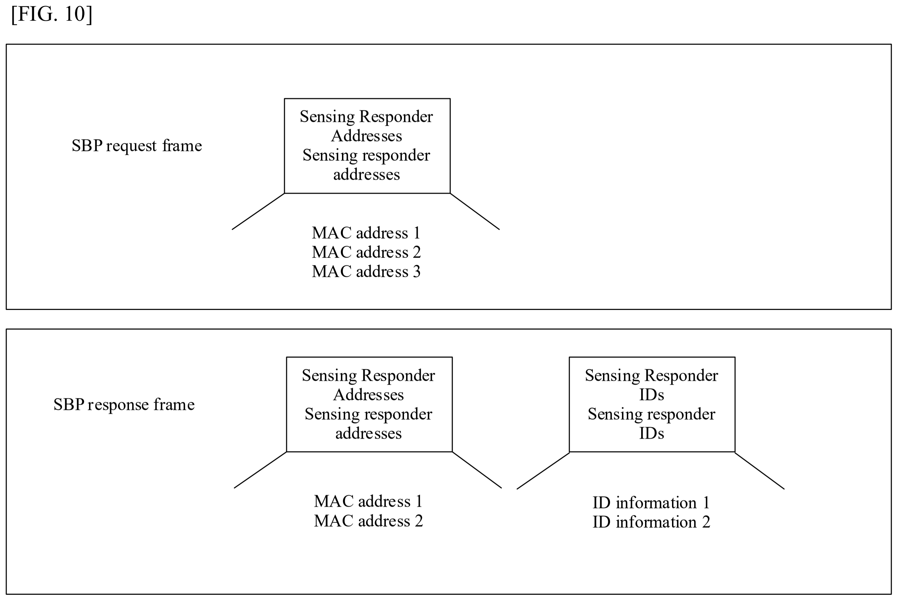

For example, FIG. 10 is a diagram of address information and identity information in an SBP response frame according to an embodiment of this application. As shown in FIG. 10, a MAC address 1 and ID information 1 are respectively a MAC address and ID information of a sensing responder 1, a MAC address 2 and ID information 2 are respectively a MAC address and ID information of a sensing responder 1, and a MAC address 3 and ID information 3 are respectively a MAC address and ID information of a sensing responder 3. It is assumed that the Sensing Responder Addresses field in the SBP request frame includes the MAC address 1, the MAC address 2, and the MAC address 3, the value indicated by the Number of Sensing Responders field in the SBP request frame is 2 (that is, M=2), the Mandatory Number of Responders field indicates mandatory, the value of the Preferred Responder List field is 1, the value indicated by the Number of Preferred Responders field is 3 (that is, N=3), and the value of the Mandatory Preferred Responder field is 1. In this case, the SBP responder may determine two sensing responders, for example, the sensing responder 1 and the sensing responder 2. Therefore, the Sensing Responder Addresses field in the SBP response frame may include the MAC address 1 and the MAC address 2, and the Sensing Responder IDs field in the SBP response frame may include the ID information 1 and the ID information 2. The MAC address 1 one-to-one corresponds to the ID information 1 (to be specific, the MAC address 1 and the ID information 1 appear in a same order, are the first to appear, and correspond to a same sensing responder, namely, the sensing responder 1). The MAC address 2 one-to-one corresponds to the ID information 2 (to be specific, the MAC address 2 and the ID information 2 appear in a same order, are the second to appear, and correspond to a same sensing responder, namely, the sensing responder 2).

Optionally, when a number of AIDs/USIDs included in the Sensing Responder IDs field in the SBP response frame (or MLME-SBP.response primitive) is greater than a number of MAC addresses included in the Sensing Responder Addresses field in the SBP response frame (or MLME-SBP.response primitive), some AIDs/USIDs included in the Sensing Responder IDs field in the SBP response frame (or MLME-SBP.response primitive) one-to-one correspond to MAC addresses included in the Sensing Responder Addresses field in the SBP response frame (or MLME-SBP.response primitive) (in this case, the SBP responder selects some sensing responders from the preferred sensing responders provided by the SBP initiator and selects some other sensing responders outside the preferred sensing responders provided by the SBP initiator as final sensing responders, and exchanges, to the SBP initiator through the SBP response frame, address information of the some sensing responders selected from the preferred sensing responders provided by the SBP initiator, and exchanges, to the SBP initiator through the SBP response frame, ID information of the two parts of sensing responders).

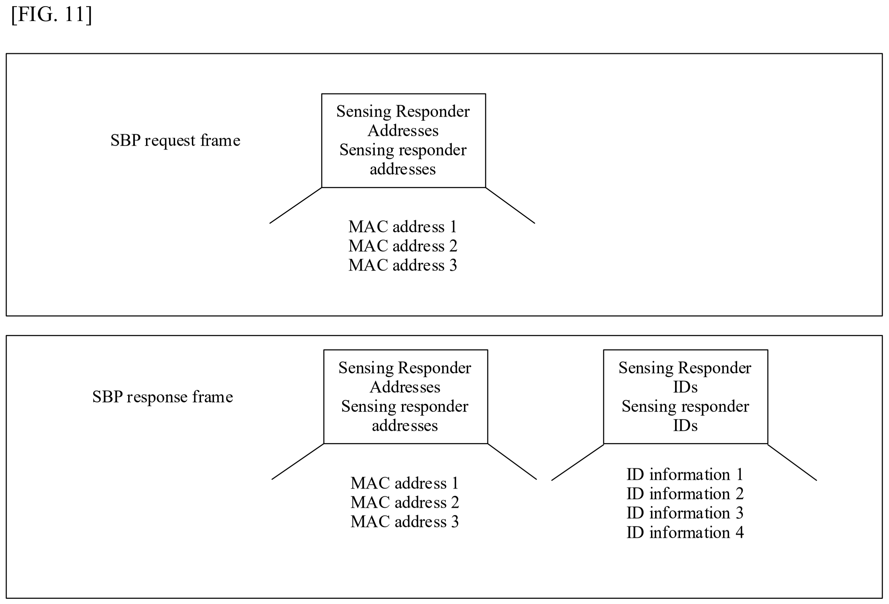

For another example, FIG. 11 is another diagram of address information and identity information in an SBP response frame according to an embodiment of this application. As shown in FIG. 11, a MAC address 1 and ID information 1 are respectively a MAC address and ID information of a sensing responder 1, a MAC address 2 and ID information 2 are respectively a MAC address and ID information of a sensing responder 1, a MAC address 3 and ID information 3 are respectively a MAC address and ID information of a sensing responder 3, and ID information 4 is ID information of a sensing responder 4. It is assumed that the Sensing Responder Addresses field in the SBP request frame includes the MAC address 1, the MAC address 2, and the MAC address 3, the value indicated by the Number of Sensing Responders field in the SBP request frame is 4 (that is, M=4), the Mandatory Number of Responders field indicates mandatory, the value of the Preferred Responder List field is 1, the value indicated by the Number of Preferred Responders field is 3 (that is, N=3), and the value of the Mandatory Preferred Responder field is 1. In this case, the SBP responder may determine four sensing responders, for example, the sensing responder 1 to the sensing responder 4. Therefore, the Sensing Responder Addresses field in the SBP response frame may include the MAC address 1, the MAC address 2, and the MAC address 3, and the Sensing Responder IDs field in the SBP response frame may include the ID information 1, the ID information 2, the ID information 3, and the ID information 4. As shown in FIG. 11, the MAC address 1 one-to-one corresponds to the ID information 1 (that is, the MAC address 1 and the ID information 1 appear in a same order, are the first to appear, and correspond to a same sensing responder, namely, the sensing responder 1), the MAC address 2 one-to-one corresponds to the ID information 2 (that is, the MAC address 2 and the ID information 2 appear in a same order, are the second to appear, and correspond to a same sensing responder, namely, the sensing responder 2), the MAC address 2 one-to-one corresponds to the ID information 2 (that is, the MAC address 2 and the ID information 2 appear in a same order, are the second to appear, and correspond to a same sensing responder, namely, the sensing responder 2), the MAC address 3 one-to-one corresponds to the ID information 3 (that is, the MAC address 3 and the ID information 3 appear in a same order, are the third to appear, and correspond to a same sensing responder, namely, the sensing responder 3), and the sensing responder 4 is a sensing responder outside the preferred sensing responder list in the SBP request frame.

Optionally, number of sensing responders indicated by the Number of Preferred Responders field in the SBP response frame (or MLME-SBP.response primitive)=number of MAC addresses in the Sensing Responder Addresses in the SBP response frame≤number of AIDs/USIDs in the Sensing Responder IDs in the SBP response frame=number of sensing responders indicated by the Number of Sensing Responders field in the SBP response frame (optional).

For ease of understanding, the following mainly uses an example in which the first response frame is an SBP response frame to further explain and describe content that is related to the first response frame when the first response frame indicates to reject the first request frame and that is described in S903. When the value of the Preferred Responder List field in the SBP Request frame is 1 (that is, the SBP request frame carries the preferred sensing responder list), if the SBP responder cannot meet a related requirement in the SBP request frame, the SBP responder may set a Status Code field to REJECTED_WITH_SUGGESTED_CHANGES or REQUEST_DECLINED and suggest related parameters. In other words, if the SBP responder cannot satisfy parameters requested by the SBP initiator, the SBP responder may set the Status Code in the SBP response frame to REJECTED_WITH_SUGGESTED_CHANGES or REQUEST _DECLINED, and carry an SBP Parameters element in the SBP response frame. The SBP Parameters element includes a parameter suggested by the SBP responder. For example, the SBP Parameters element may include one or more of a Number of Sensing Responders field, a Preferred Responder List field, a Number of Preferred Responders field, a Sensing Responder Addresses field, and the like. Optionally, the SBP Parameters element in the SBP response frame may further include a Sensing Responder IDs field. In the SBP response frame, the Number of Sensing Responders field indicates a number M' of sensing responders suggested by the SBP responder, a value 1 of the Preferred Responder List field indicates that the SBP response frame carries a preferred sensing responder list, the Number of Preferred Responders field indicates a number N' of preferred sensing responders suggested by the SBP responder, and the number N' is equal to a number of MAC addresses carried in the Sensing Responder Addresses field in the SBP response frame. Optionally, the number N' may alternatively be equal to a number of IDs carried in the Sensing Responder IDs field in the SBP response frame, or the number N' is less than the number of IDs carried in the Sensing Responder IDs field in the SBP response frame. Optionally, N' MAC addresses carried in the Sensing Responder Addresses field in the SBP response frame are a subset of N MAC addresses carried in the Sensing Responder Addresses field in the SBP request frame.

It should be noted that, during parameter suggestion, to avoid privacy leakage, a MAC address included in the Sensing Responder Addresses field in the SBP response frame is a subset of a MAC address included in the Sensing Responder Addresses field in the SBP request frame, that is, the SBP responder does not notify the SBP initiator of address information of a sensing responder that is unknown to the SBP initiator before.

Optionally, if the SBP Parameters element is present in an SBP termination (SBP Termination) frame or a DMG SBP termination frame, a related element in the SBP Parameters element is set to be the same as that in the SBP response frame. Optionally, the SBP termination frame or the DMG SBP termination frame may be transmitted by the SBP responder to the SBP initiator, or the SBP termination frame or the DMG SBP termination frame may be transmitted by the SBP initiator to the SBP responder. This is not limited herein.

For ease of understanding, the following mainly uses an example in which the first termination frame is an SBP termination frame to further explain and describe content that is related to the first termination frame and that is described in S903. For example, as shown in FIG. 5, when a value of the SBP Error Status field in the SBP termination frame is 1, it indicates that a reason for terminating an SBP procedure is that an SBP condition is incorrect (or the SBP condition does not match or the SBP condition cannot be met). In this case (that is, when the value of the SBP Error Status field is 1), the SBP Parameters element is present in the SBP termination frame, and the SBP Parameters element includes a parameter suggested by the SBP responder. For example, the SBP Parameters element may include one or more of a Number of Sensing Responders field, a Preferred Responder List field, a Number of Preferred Responders field, a Sensing Responder Addresses field, and the like. Optionally, the SBP Parameters element in the SBP termination frame may further include a Sensing Responder IDs field. The Number of Sensing Responders field in the SBP termination frame indicates a number M' of sensing responders suggested by the SBP responder, a value 1 of the Preferred Responder List field indicates that the SBP termination frame carries a preferred sensing responder list, the Number of Preferred Responders field indicates a number N' of preferred sensing responders suggested by the SBP responder, and the number N' is equal to a number of MAC addresses carried in the Sensing Responder Addresses field in the SBP termination frame. Optionally, the number N' may alternatively be equal to a number of IDs carried in the Sensing Responder IDs field in the SBP termination frame, or the number N' is less than the number of IDs carried in the Sensing Responder IDs field in the SBP termination frame. Optionally, N' MAC addresses carried in the Sensing Responder Addresses field in the SBP termination frame are a subset of N MAC addresses carried in the Sensing Responder Addresses field in the SBP request frame.

For example, as shown in Table 3, when the value of the DMG SBP Setup Unsuccess field in the DMG SBP termination frame is 1, it indicates that DMG sensing by proxy fails to be set up. In this case (that is, when the value of the DMG SBP Setup Unsuccess field is 1), a DMG SBP Parameters element is present in the DMG SBP termination frame. The DMG SBP Parameters element includes a parameter suggested by the SBP responder. For example, the DMG SBP Parameters element may include one or more of a DMG Number of Sensing Responders field, a DMG Preferred Responder List field, a DMG Number of Preferred Responders field, a DMG Sensing Responder Addresses field, and the like. Optionally, the DMG SBP Parameters element in the SBP termination frame may further include a DMG Sensing Responder IDs field. The DMG Number of Sensing Responders field in the SBP termination frame indicates a number M' of DMG sensing responders suggested by the SBP responder, a value 1 of the DMG Preferred Responder List field indicates that the SBP termination frame carries a DMG preferred sensing responder list, the DMG Number of Preferred Responders field indicates a number N' of DMG preferred sensing responders suggested by the SBP responder, and the number N' is equal to a number of MAC addresses carried in the DMG Sensing Responder Addresses field in the SBP termination frame. Optionally, the number N' may alternatively be equal to a number of IDs carried in the DMG Sensing Responder IDs field in the SBP termination frame, or the number N' is less than the number of IDs carried in the DMG Sensing Responder IDs field in the SBP termination frame. Optionally, N' MAC addresses carried in the DMG Sensing Responder Addresses field in the DMG SBP termination frame are a subset of N MAC addresses carried in the DMG Sensing Responder Addresses field in the DMG SBP request frame.

In step S903 in this embodiment of this application, on the basis of optimizing a rule for setting a parameter of the SBP request frame, a rule for optimizing parameter setting of the SBP response frame or the SBP termination frame is further proposed. For example, the SBP responder cannot transmit, to the SBP initiator through the SBP response frame or the SBP termination frame, a MAC address that is not carried in the SBP request frame by the SBP initiator. Therefore, a risk of privacy leakage is reduced. In addition, this embodiment of this application further resolves a problem of how to carry a parameter when the Status Code in the SBP response frame is not SUCCESS (for example, the Status Code is REQUEST_DECLINED (REQUEST_DECLINED), or the Status Code is REJECTED_WITH_SUGGESTED_CHANGES (REJECTED_WITH_SUGGESTED_CHANGES)), or when the value of the SBP Error Status in the SBP termination frame is 1.

### Embodiment 2

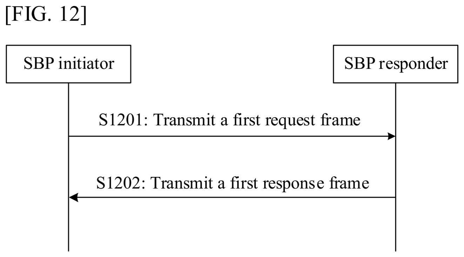

In an existing SBP response frame, when a Status Code is SUCCESS, and a value of a Preferred Responder List field in a corresponding SBP request frame is 1 (that is, the SBP request frame carries a preferred sensing responder list and a MAC address), the Preferred Responder List field is set to 1, and a Sensing Responder Addresses field and a Sensing Responder IDs field are carried in the SBP response frame. However, an SBP responder may notify an SBP initiator of a MAC address of a sensing responder that is unknown to the SBP initiator, that is, privacy leakage occurs. Based on this, this application further provides an embodiment shown in FIG. 12. In this embodiment, an SBP responder cannot transmit, to an SBP initiator through an SBP response frame, a MAC address that is not carried in a SBP request frame by the SBP initiator. Therefore, a risk of privacy leakage is reduced. In addition, the embodiment shown in FIG. 12 further resolves a problem of how to carry a parameter when a Status Code in the SBP response frame is not SUCCESS (for example, the Status Code is REQUEST_DECLINED (REQUEST_DECLINED), or the Status Code is REJECTED_WITH_SUGGESTED _CHANGES (REJECTED_WITH_SUGGESTED_CHANGES)).

FIG. 12 is a schematic flowchart of another communication method according to an embodiment of this application. As shown in FIG. 12, the communication method includes the following steps S1201 and S1202. It should be noted that FIG. 12 is a schematic flowchart of a method embodiment of this application, and shows detailed communication steps or operations of the method. However, these steps or operations are merely examples, and other operations or variations of the operations in FIG. 12 may be further performed in this embodiment of this application. In addition, the steps in FIG. 12 may be performed in an order different from that presented in FIG. 12, and not all the operations in FIG. 12 may be necessarily performed. Specifically:
S1201: An SBP initiator transmits a first request frame to an SBP responder. Correspondingly, the SBP responder receives the first request frame from the SBP initiator.

In some feasible implementations, when a value of a first field in the first request frame indicates that a preferred sensing responder in a first preferred sensing responder list carried in the first request frame is mandatory, a second field and a third field in the first request frame are reserved fields. In other words, when a value of a Mandatory Preferred Responder field in the first request frame is 1, a Number of Sensing Responders field and a Mandatory Number of Responders field are reserved fields.

In some feasible implementations, when a value indicated by the Number of Sensing Responders is not 0 (assumed to be M), and a value of the Mandatory Number of Responders field is 0, the SBP responder selects, based on a requirement, a maximum of M sensing responders to set up sensing sessions, where M is an integer greater than 0. Optionally, for this implementation, refer to a summary of L1 in the following Table 5.

Optionally, in some feasible implementations, when the value indicated by the Number of Sensing Responders is not 0 (assumed to be M), and the value of the Mandatory Number of Responders field is 1, the SBP responder selects, based on a requirement, M sensing responders to set up sensing sessions. Optionally, for this implementation, refer to a summary of L2 in the following Table 5.

Optionally, in some feasible implementations, when a value of the Mandatory Preferred Responder field is 0, the value indicated by the Number of Sensing Responders is not 0 (assumed to be M), and the value of the Mandatory Number of Responders field is 0, the SBP responder selects, based on a requirement, a maximum of M sensing responders from the preferred sensing responder (assumed to be N, where N is an integer greater than 0) list/out of the preferred sensing responder list to set up sensing sessions. Optionally, for this implementation, refer to a summary of L3 in the following Table 5.

Optionally, in some feasible implementations, when the value of the Mandatory Preferred Responder field is 0, the value indicated by the Number of Sensing Responders is not 0 (assumed to be M), and the value of the Mandatory Number of Responders field is 1, the SBP responder selects, based on a requirement, M sensing responders from the preferred sensing responder (assumed to be N) list/out of the preferred sensing responder list to set up sensing sessions. Optionally, for this implementation, refer to a summary of L4 in the following Table 5.

Optionally, in some feasible implementations, when the Mandatory Preferred Responder field is 1, the Number of Sensing Responders field and the Mandatory Number of Responders field are reserved fields. Optionally, for this implementation, refer to a summary of L5 in the following Table 5.

**Table 5**

| | **Number of Sensing Responders** | **Mandatory Number of Responders** | **Preferred Responder List** | **Number of Preferred Responders** | **Mandatory Preferred Responder** | **Meaning** |
|---|---|---|---|---|---|---|
| L1 | M | No | 0 | / | / | Select a maximum of M sensing responders |
| L2 | M | Yes | 0 | / | / | Select M sensing responders |
| L3 | M | No | 1 | N | No | Select a maximum of M sensing responders within N preferred sensing responders or outside the N preferred sensing responders |
| L4 | M | Yes | 1 | N | No | Select M sensing responders within N preferred sensing responders or outside the N preferred sensing responders |
| L5 | Reserved field | Reserved field | 1 | N | Yes | Use all N preferred sensing responders as selected sensing responders |

S1202: The SBP responder transmits a first response frame to the SBP initiator. Correspondingly, the SBP initiator receives the first response frame from the SBP responder.

In some feasible implementations, when the first response frame indicates to accept the first request frame, address information of a sensing responder included in the first response frame is a subset of address information of a sensing responder included in the first request frame. In this application, that the address information of the sensing responder included in the first response frame is the subset of the address information of the sensing responder included in the first request frame may be understood as follows: The address information of the sensing responder included in the first response frame is a part or all of the address information of the sensing responder included in the first request frame. In other words, a number of pieces of address information of sensing responders included in the first response frame is less than or equal to a number of pieces of address information of sensing responders included in the first request frame. For example, when a Status Code in the first response frame is SUCCESS (SUCCESS), it indicates that the first response frame indicates to accept the first request frame.

Optionally, the address information of the sensing responder included in the first request frame may be carried in a fourth field, and the address information of the sensing responder included in the first response frame may be carried in a fifth field. In other words, when the first response frame indicates to accept the first request frame, the address information of the sensing responder included in the fifth field in the first response frame is a subset of the address information of the sensing responder included in the fourth field in the first request frame.

Optionally, when the first response frame indicates to accept the first request frame, the first response frame may further include a seventh field, and the seventh field carries identity information of a sensing responder. Optionally, a number of pieces of address information included in the fifth field in the first response frame may be less than or equal to a number of pieces of identity information included in the seventh field in the first response frame.

Optionally, when the number of pieces of address information included in the fifth field in the first response frame is equal to the number of pieces of identity information included in the seventh field in the first response frame, a value indicated by a ninth field in the first response frame may be equal to the number of pieces of address information included in the fifth field in the first response frame and/or the number of pieces of identity information included in the seventh field in the first response frame. Optionally, when the number of pieces of address information included in the fifth field in the first response frame is equal to the number of pieces of identity information included in the seventh field in the first response frame, a value indicated by a thirteenth field in the first response frame may be equal to the number of pieces of address information included in the fifth field in the first response frame and/or the number of pieces of identity information included in the seventh field in the first response frame.

Optionally, when the number of pieces of address information included in the fifth field in the first response frame is less than the number of pieces of identity information included in the seventh field in the first response frame, a value indicated by a ninth field in the first response frame may be equal to the number of pieces of address information included in the fifth field in the first response frame. Optionally, when the number of pieces of address information included in the fifth field in the first response frame is less than the number of pieces of identity information included in the seventh field in the first response frame, the value indicated by the thirteenth field in the first response frame may be equal to the number of pieces of identity information included in the seventh field in the first response frame. Optionally, when the number of pieces of address information included in the fifth field in the first response frame is less than the number of pieces of identity information included in the seventh field in the first response frame, both the value indicated by the ninth field and the value indicated by the thirteenth field in the first response frame may be equal to the number of pieces of address information included in the fifth field in the first response frame, and the number of pieces of identity information included in the first response frame may not be indicated in the first response frame.

Optionally, the first request frame further includes a first field, and the first field indicates whether the preferred sensing responder in the preferred sensing responder list carried in the first request frame is mandatory. In a case (1), when the first response frame indicates to accept the first request frame, and a value of the first field in the first request frame indicates that the preferred sensing responder in the preferred sensing responder list carried in the first request frame is mandatory, the address information of the sensing responder included in the fifth field in the first response frame is the same as the address information included in the fourth field in the first request frame. Herein, the address information of the sensing responder included in the fifth field in the first response frame and the address information included in the fourth field in the first request frame are the same, that is, have a same number of pieces of address information and same specific content of the address information. Optionally, in the case (1), the first response frame further includes the seventh field, and the seventh field carries the identity information of the sensing responder. A number of pieces of address information of sensing responders included in the fifth field in the first response frame is the same as a number of pieces of identity information of sensing responders included in the seventh field in the first response frame. Optionally, in the case (1), the address information of the sensing responder included in the fifth field in the first response frame may alternatively one-to-one correspond to the identity information of the sensing responder included in the seventh field in the first response frame.

In the other case (2), when the first response frame indicates to accept the first request frame, and a value of the first field in the first request frame indicates that the preferred sensing responder in the preferred sensing responder list carried in the first request frame is optional, the address information of the sensing responder included in the fifth field in the first response frame is a subset of the address information of the sensing responder included in the fourth field in the first request frame. Optionally, in the case (2), the first response frame further includes the seventh field, and the seventh field carries the identity information of the sensing responder. A number of pieces of address information of sensing responders included in the fifth field in the first response frame is less than or equal to a number of pieces of identity information of sensing responders included in the seventh field in the first response frame. Optionally, in the case (2), when the number of pieces of address information included in the fifth field in the first response frame is equal to the number of pieces of identity information included in the seventh field in the first response frame, the address information in the fifth field may one-to-one correspond to the identity information in the seventh field. Herein, one-to-one correspondence may be understood as that an arrangement manner/arrangement order/occurrence order of the ID information included in the seventh field in the first response frame is consistent with that of the address information in the fifth field, and ID information and a MAC address that are in the two fields respectively and that have a same arrangement location/occurrence order correspond to a same sensing responder. Optionally, in the case (2), when the number of pieces of address information included in the fifth field in the first response frame is less than the number of pieces of identity information included in the seventh field in the first response frame, some pieces of identity information in the seventh field may one-to-one correspond to the address information in the fifth field.

Optionally, when the first response frame indicates to accept the first request frame, the first response frame may further include one or more of the following fields: an eighth field and a ninth field. The eighth field indicates whether the first response frame carries a preferred sensing responder list, and the ninth field indicates a number of preferred sensing responders in the preferred sensing responder list carried in the first response frame. Optionally, in the foregoing case (1), number of sensing responders indicated by the ninth field in the first response frame=number of MAC addresses in the fifth field in the first response frame=number of pieces of ID information in the seventh field in the first response frame=number of sensing responders indicated by a fifteenth field in the first request frame=number of MAC addresses in the fourth field in the first request frame. Optionally, in the foregoing case (2), number of sensing responders indicated by the ninth field in the first response frame=number of MAC addresses in the fifth field in the first response frame≤number of pieces of ID information in a seventh field in the first response frame=number of sensing responders indicated by the thirteenth field in the first response frame (optional).

Optionally, in some feasible implementations, when the first response frame indicates to reject the first request frame, the first response frame may include a number of sensing responders suggested by the SBP responder and address information of a sensing responder suggested by the SBP responder. For example, the number of sensing responders suggested by the SBP responder may be carried in the thirteenth field. Herein, the number of sensing responders suggested by the SBP responder may also be described as a suggested number of sensing responders, or may be described as a number of sensing responders. This is not limited in this application. Optionally, when the first response frame indicates to reject the first request frame, the address information of the sensing responder included in the fifth field in the first response frame may be a subset of the address information of the sensing responder included in the fourth field in the first request frame. For example, when a Status Code in the first response frame is REQUEST_DECLINED (REQUEST_DECLINED) or REJECTED_WITH_SUGGESTED_CHANGES (REJECTED_WITH_SUGGESTED_CHANGES), it indicates that the first response frame indicates to reject the first request frame.

Optionally, when the first response frame indicates to reject the first request frame, the first response frame may include the seventh field, or the first response frame may not include the seventh field. When the first response frame includes the seventh field, a case is similar to the case in which the first response frame includes the seventh field when the first response frame indicates to accept the first request frame. Details are not described herein again. Optionally, when the first response frame indicates to reject the first request frame, the first response frame may further include one or more of the following fields: an eighth field and a ninth field. The eighth field indicates whether the first response frame carries a preferred sensing responder list, and the ninth field indicates a number of preferred sensing responders in the preferred sensing responder list carried in the first response frame.

It should be noted that the first response frame in this application may be an SBP response frame, or the first response frame may be a DMG SBP response frame. For example, in this embodiment of this application, the fourth field and the fifth field may be fields that are in different frames and that carry same type information. For example, the fourth field and the fifth field may be fields that are respectively in the first request frame and the first response frame and that carry address information of a sensing responder. In an implementation, fields that are in different frames and that carry same type information may have a same name. For example, when the first request frame is an SBP request frame, and the first response frame is an SBP response frame, both the fifth field and the sixth field may be referred to as Sensing Responder Addresses fields. When the first request frame is a DMG SBP request frame, and the first response frame is a DMG SBP response frame, both the fourth field and the fifth field may be referred to as DMG Sensing Responder Addresses fields. Optionally, in another implementation, fields that are in different frames and that carry same type information may have different names. For example, when the first request frame is an SBP request frame, and the first response frame is an SBP response frame, the fourth field and the fifth field may be respectively referred to as a Sensing Responder Addresses 1 field and a Sensing Responder Addresses 2 field.

Optionally, the seventh field and the tenth field may be fields that are in different frames and that carry same type information. For example, the seventh field and the tenth field may be fields that are respectively in the first response frame and a first termination frame and that carry identity information of a sensing responder. For example, when the first request frame is a DMG SBP request frame, and the first response frame is a DMG SBP response frame, both the seventh field and the tenth field may be referred to as Sensing Responder IDs fields.

Optionally, the second field and the thirteenth field may be fields that are in different frames and that carry same type information. For example, the second field and the thirteenth field may be fields that are respectively in the first request frame and the first response frame and that indicate a number of sensing responders. For example, when the first request frame is an SBP request frame, and the first response frame is an SBP response frame, both the second field and the thirteenth field may be referred to as Number of Sensing Responders fields.

Optionally, the fourteenth field and the eighth field may be fields that are in different frames and that carry same type information. For example, the fourteenth field and the eighth field may be fields that are respectively in the first request frame and the first response frame and that indicate whether a corresponding frame carries a preferred sensing responder list. For example, when the first request frame is a DMG SBP request frame, and the first response frame is a DMG SBP response frame, both the fourteenth field and the eighth field may be referred to as Preferred Responder List fields.

Optionally, the fifteenth field and the ninth field may be fields that are in different frames and that carry same type information. For example, the fifteenth field and the ninth field may be fields that are respectively in the first request frame and the first response frame and that indicate a number of preferred sensing responders in a preferred sensing responder list carried in a corresponding frame. For example, when the first request frame is a DMG SBP request frame, and the first response frame is a DMG SBP response frame, both the fifteenth field and the ninth field may be referred to as Number of Preferred Responders fields.

It should be noted that names of the fields in this embodiment of this application are merely examples, and may be other names in specific implementation. This is not specifically limited in this embodiment of this application.

For ease of understanding, the following mainly uses an example in which the first response frame is an SBP response frame to further explain and describe content that is related to the first response frame when the first response frame indicates to accept the first request frame and that is described in S1202. Based on this, when a Status Code in the SBP response frame (or MLME-SBP.response primitive) is SUCCESS, and the Preferred Responder List field is set to 1, rules for carrying parameters of the Sensing Responder IDs field and the Sensing Responder Addresses field in the SBP response frame are refined and adjusted. An added rule is as follows:
In a rule (1), when a value of the Mandatory Preferred Responder field in the corresponding SBP request frame (or MLME-SBP.indication primitive) is 1, a MAC address included in the Sensing Responder Addresses field in the SBP response frame (or MLME-SBP.response primitive) is the same as a MAC address included in the Sensing Responder Addresses field in the SBP request frame (or MLME-SBP.indication primitive). That the MAC address included in the Sensing Responder Addresses field in the SBP response frame is the same as the MAC address included in the Sensing Responder Addresses field in the SBP request frame may be understood as follows: Numbers of MAC addresses are the same, and information about the MAC addresses is the same.

Optionally, in the rule (1), a number of AIDs/USIDs included in the Sensing Responder IDs field in the SBP response frame (or MLME-SBP.response primitive) is the same a number of MAC addresses in the Sensing Responder Addresses field in the SBP response frame (or MLME-SBP.response primitive) (is also the same as a number of preferred sensing responders (addresses) in the SBP request frame).

Optionally, in the rule (1), AIDs/USIDs included in the Sensing Responder IDs field in the SBP response frame (or MLME-SBP.response primitive) one-to-one correspond to MAC addresses in the Sensing Responder Addresses field in the SBP response frame (or MLME-SBP.response primitive). Herein, one-to-one correspondence may be understood as that an arrangement manner/arrangement order of the AIDs/USIDs included in the Sensing Responder IDs field in the SBP response frame is consistent with that of the MAC addresses in the Sensing Responder Addresses field, and a MAC address and ID information that are in the two fields respectively and that have a same arrangement location correspond to a same sensing responder.

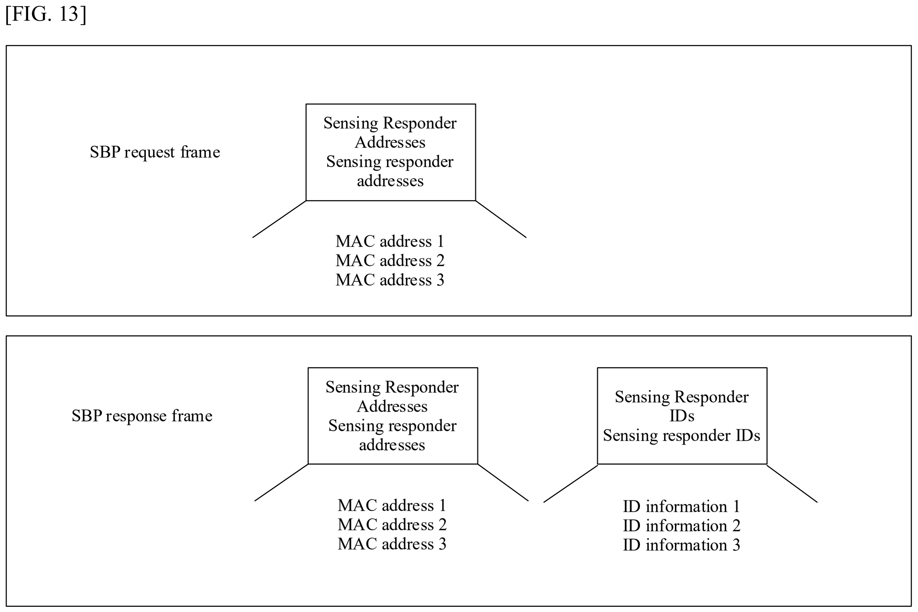

For example, FIG. 13 is still another diagram of address information and identity information in an SBP response frame according to an embodiment of this application. As shown in FIG. 13, a MAC address 1 and ID information 1 are respectively a MAC address and ID information of a sensing responder 1, a MAC address 2 and ID information 2 are respectively a MAC address and ID information of a sensing responder 1, and a MAC address 3 and ID information 3 are respectively a MAC address and ID information of a sensing responder 3. It is assumed that the Sensing Responder Addresses field in the SBP request frame includes the MAC address 1, the MAC address 2, and the MAC address 3, the Number of Sensing Responders field in the SBP request frame is a reserved field, the Mandatory Number of Responders field is a reserved field, a value of the Preferred Responder List field is 1, a value indicated by the Number of Preferred Responders field is 3 (that is, N=3), and a value of the Mandatory Preferred Responder field is 1. In this case, if the SBP responder needs to select three sensing responders, the Sensing Responder Addresses field in the SBP response frame may include the MAC address 1, the MAC address 2, and the MAC address 3, and the Sensing Responder IDs field in the SBP response frame includes the ID information 1, the ID information 2, and the ID information 3. As shown in FIG. 13, the MAC address 1 one-to-one corresponds to the ID information 1, the MAC address 2 one-to-one corresponds to the ID information 2, and the MAC address 3 one-to-one corresponds to the ID information 3.

Optionally, in the rule (1), number of sensing responders indicated by the Number of Preferred Responders field in the SBP response frame (or MLME-SBP.response primitive)=number of MAC addresses in the Sensing Responder Addresses in the SBP response frame=number of AIDs/USIDs in the Sensing Responder IDs in the SBP response frame=number of sensing responders indicated by the Number of Sensing Responders field in the SBP response frame (optional)=number of sensing responders indicated by the Number of Preferred Responders field in the SBP request frame=number of MAC addresses in the Sensing Responder Addresses in the SBP request frame.

In a rule (2), when the value of the Mandatory Preferred Responder field in the corresponding SBP request frame (or MLME-SBP.indication primitive) is 0, a number of MAC addresses included in the Sensing Responder Addresses field in the SBP response frame (or MLME-SBP.response primitive) is less than or equal to a number of MAC addresses included in the Sensing Responder Addresses field in the SBP request frame (or MLME-SBP.indication primitive) (in this case, the SBP responder may select some of preferred sensing responders provided by the SBP initiator as final sensing responders, and exchange, to the SBP initiator through the SBP response frame, address information and ID information that are of the some sensing responders).

Optionally, in the rule (2), a number of AIDs/USIDs included in the Sensing Responder IDs field in the SBP response frame (or MLME-SBP.response primitive) is the same as a number of MAC addresses included in the Sensing Responder Addresses field in the SBP response frame (or MLME-SBP.response primitive), or the number of AIDs/USIDs included in the Sensing Responder IDs field in the SBP response frame (or MLME-SBP.response primitive) is greater than the number of MAC addresses included in the Sensing Responder Addresses field in the SBP response frame (or MLME-SBP.response primitive).

Optionally, in the rule (2), when the number of AIDs/USIDs included in the Sensing Responder IDs field in the SBP response frame (or MLME-SBP.response primitive) is equal to the number of MAC addresses included in the Sensing Responder Addresses field in the SBP response frame (or MLME-SBP.response primitive), AIDs/USIDs included in the Sensing Responder IDs field in the SBP response frame (or MLME-SBP.response primitive) one-to-one correspond to MAC addresses included in the Sensing Responder Addresses field in the SBP response frame (or MLME-SBP.response primitive).

Optionally, in the rule (2), when the number of AIDs/USIDs included in the Sensing Responder IDs field in the SBP response frame (or MLME-SBP.response primitive) is greater than the number of MAC addresses included in the Sensing Responder Addresses field in the SBP response frame (or MLME-SBP.response primitive), some AIDs/USIDs included in the Sensing Responder IDs field in the SBP response frame (or MLME-SBP.response primitive) one-to-one correspond to MAC addresses included in the Sensing Responder Addresses field in the SBP response frame (or MLME-SBP.response primitive) (in this case, the SBP responder selects some sensing responders from the preferred sensing responders provided by the SBP initiator and selects some other sensing responders outside the preferred sensing responders provided by the SBP initiator as final sensing responders, exchanges, to the SBP initiator through the SBP response frame, address information of the some sensing responders selected from the preferred sensing responders provided by the SBP initiator, and exchanges, to the SBP initiator through the SBP response frame, ID information of the two parts of sensing responders).

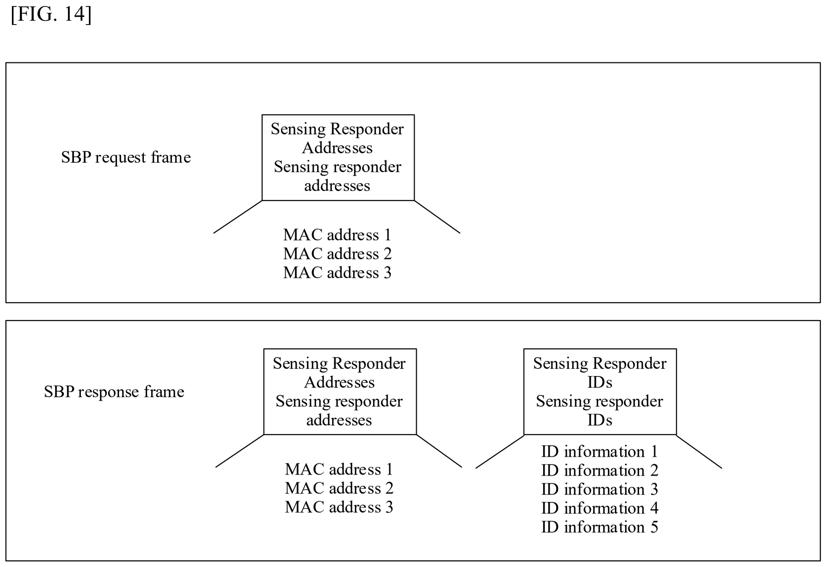

For example, FIG. 14 is yet another diagram of address information and identity information in an SBP response frame according to an embodiment of this application. As shown in FIG. 14, a MAC address 1 and ID information 1 are respectively a MAC address and ID information of a sensing responder 1, a MAC address 2 and ID information 2 are respectively a MAC address and ID information of a sensing responder 1, a MAC address 3 and ID information 3 are respectively a MAC address and ID information of a sensing responder 3, ID information 4 is ID information of a sensing responder 4, and ID information 5 is ID information of a sensing responder 5. It is assumed that the Sensing Responder Addresses field in the SBP request frame includes the MAC address 1, the MAC address 2, and the MAC address 3, a value indicated by the Number of Sensing Responders field in the SBP request frame is 5 (that is, M=5), the Mandatory Number of Responders field indicates mandatory, a value of the Preferred Responder List field is 1, a value indicated by the Number of Preferred Responders field is 3 (that is, N=3), and a value of the Mandatory Preferred Responder field is 0. In this case, if the SBP responder needs to select five sensing responders, the Sensing Responder Addresses field in the SBP response frame may include the MAC address 1, the MAC address 2, and the MAC address 3, and the Sensing Responder IDs field in the SBP response frame includes the ID information 1, the ID information 2, the ID information 3, the ID information 4, and the ID information 5. As shown in FIG. 14, the MAC address 1 one-to-one corresponds to the ID information 1, the MAC address 2 one-to-one corresponds to the ID information 2, the MAC address 3 one-to-one corresponds to the ID information 3, and the sensing responder 4 and the sensing responder 5 are sensing responders outside the preferred sensing responder list in the SBP request frame.

Optionally, in the rule (2), number of sensing responders indicated by the Number of Preferred Responders field in the SBP response frame (or MLME-SBP.response primitive)=number of MAC addresses in the Sensing Responder Addresses in the SBP response frame≤number of AIDs/USIDs in the Sensing Responder IDs in the SBP response frame=number of sensing responders indicated by the Number of Sensing Responders field in the SBP response frame (optional).

For ease of understanding, the following mainly uses an example in which the first response frame is an SBP response frame to further explain and describe content that is related to the first response frame when the first response frame indicates to reject the first request frame and that is described in S1202. When the value of the Preferred Responder List field in the SBP request frame is 1 (that is, the SBP request frame carries the preferred sensing responder list), if the SBP responder cannot meet a related requirement in the SBP request frame, the SBP responder may set the Status Code field to REJECTED_WITH_SUGGESTED_CHANGES or REQUEST_DECLINED and suggest related parameters. In other words, if the SBP responder cannot satisfy parameters requested by the SBP initiator, the SBP responder may set the Status Code in the SBP response frame to REJECTED_WITH_SUGGESTED_CHANGES or REQUEST_DECLINED, and carry an SBP Parameters element in the SBP response frame. The SBP Parameters element includes a parameter suggested by the SBP responder.

For example, the SBP Parameters element may include one or more of a Number of Sensing Responders field, a Preferred Responder List field, a Number of Preferred Responders field, a Sensing Responder Addresses field, and the like. Optionally, the SBP Parameters element in the SBP response frame may further include a Sensing Responder IDs field. In the SBP response frame, the Number of Sensing Responders field indicates a number M' of sensing responders suggested by the SBP responder, a value 1 of the Preferred Responder List field indicates that the SBP response frame carries a preferred sensing responder list, the Number of Preferred Responders field indicates a number N' of preferred sensing responders suggested by the SBP responder, and the number N' is equal to a number of MAC addresses carried in the Sensing Responder Addresses field in the SBP response frame. Optionally, the number N' may alternatively be equal to a number of IDs carried in the Sensing Responder IDs field in the SBP response frame, or the number N' is less than the number of IDs carried in the Sensing Responder IDs field in the SBP response frame. Optionally, N' MAC addresses carried in the Sensing Responder Addresses field in the SBP response frame are a subset of N MAC addresses carried in the Sensing Responder Addresses field in the SBP request frame.

It should be noted that, during parameter suggestion, to avoid privacy leakage, a MAC address included in the Sensing Responder Addresses field in the SBP response frame is a subset of a MAC address included in the Sensing Responder Addresses field in the SBP request frame, that is, the SBP responder does not notify the SBP initiator of address information of a sensing responder that is unknown to the SBP initiator before.

For example, it is assumed that, in the SBP request frame (or MLME-SBP.indication primitive) transmitted by the SBP initiator to the SBP responder, the Number of Sensing Responders field indicates that a number of sensing responders requested by the SBP initiator is M, the value of the Mandatory Number of Responders field is 1, the value of the Preferred Responder List field is 1, the Number of Preferred Responders field indicates that N preferred sensing responders are included, and the value of the Mandatory Preferred Responder field is 0. If the SBP responder cannot satisfy the parameters requested by the SBP initiator, the Status Code in the SBP response frame transmitted by the SBP responder to the SBP initiator may be set to REJECTED_WITH_SUGGESTED_CHANGES, and the SBP response frame carries an SBP Parameters element. The SBP Parameters element includes one or more of a Number of Sensing Responders field, a Preferred Responder List field, a Number of Preferred Responders field, a Sensing Responder Addresses field, a Sensing Responder IDs field, and the like. In the SBP response frame, the Number of Sensing Responders field indicates a number M' of sensing responders suggested by the SBP responder, a value 1 of the Preferred Responder List field indicates that the SBP response frame carries a preferred sensing responder list, the Number of Preferred Responders field indicates a number N' of preferred sensing responders suggested by the SBP responder, and the number N' is equal to a number of MAC addresses carried in the Sensing Responder Addresses field in the SBP response frame. Optionally, the number N' may alternatively be equal to a number of IDs carried in the Sensing Responder IDs field in the SBP response frame, or the number N' is less than the number of IDs carried in the Sensing Responder IDs field in the SBP response frame. Optionally, N' MAC addresses carried in the Sensing Responder Addresses field in the SBP response frame are a subset of N MAC addresses carried in the Sensing Responder Addresses field in the SBP request frame.

For another example, it is assumed that, in the SBP request frame (or MLME-SBP.indication primitive) transmitted by the SBP initiator to the SBP responder, the Number of Sensing Responders field is a reserved field, the Mandatory Number of Responders field is a reserved field, the value of the Preferred Responder List field is 1, the Number of Preferred Responders field indicates that N preferred sensing responders are included, and the value of the Mandatory Preferred Responder field is 1. If the SBP responder cannot satisfy the parameters requested by the SBP initiator, the Status Code in the SBP response frame transmitted by the SBP responder to the SBP initiator may be set to REJECTED_WITH_SUGGESTED_CHANGES, and the SBP response frame carries an SBP Parameters element. The SBP Parameters element includes one or more of a Number of Sensing Responders field, a Preferred Responder List field, a Number of Preferred Responders field, a Sensing Responder Addresses field, a Sensing Responder IDs field, and the like. In the SBP response frame, the Number of Sensing Responders field indicates a number M' of sensing responders suggested by the SBP responder, a value 1 of the Preferred Responder List field indicates that the SBP response frame carries a preferred sensing responder list, the Number of Preferred Responders field indicates a number N' of preferred sensing responders suggested by the SBP responder, and the number N' is equal to a number of MAC addresses carried in the Sensing Responder Addresses field in the SBP response frame. Optionally, the number N' may alternatively be equal to a number of IDs carried in the Sensing Responder IDs field in the SBP response frame, or the number N' is less than the number of IDs carried in the Sensing Responder IDs field in the SBP response frame. Optionally, N' MAC addresses carried in the Sensing Responder Addresses field in the SBP response frame are a subset of N MAC addresses carried in the Sensing Responder Addresses field in the SBP request frame.

For another example, it is assumed that, in the SBP request frame (or MLME-SBP.indication primitive) transmitted by the SBP initiator to the SBP responder, the Number of Sensing Responders indicates the number of sensing responders requested by the SBP initiator is M, the Mandatory Number of Responders field is 0, the Preferred Responder List field is 1, the Number of Preferred Responders field indicates that N preferred sensing responders are included, and the value of the Mandatory Preferred Responder field is 0. If the SBP responder cannot satisfy the parameters requested by the SBP initiator, the Status Code in the SBP response frame transmitted by the SBP responder to the SBP initiator may be set to REJECTED_WITH_SUGGESTED_CHANGES, and the SBP response frame carries an SBP Parameters element. The SBP Parameters element includes one or more of a Number of Sensing Responders field, a Preferred Responder List field, a Number of Preferred Responders field, a Sensing Responder Addresses field, a Sensing Responder IDs field, and the like. In the SBP response frame, the Number of Sensing Responders field indicates a number M' of sensing responders suggested by the SBP responder, a value 1 of the Preferred Responder List field indicates that the SBP response frame carries a preferred sensing responder list, the Number of Preferred Responders field indicates a number N' of preferred sensing responders suggested by the SBP responder, and the number N' is equal to a number of MAC addresses carried in the Sensing Responder Addresses field in the SBP response frame. Optionally, the number N' may alternatively be equal to a number of IDs carried in the Sensing Responder IDs field in the SBP response frame, or the number N' is less than the number of IDs carried in the Sensing Responder IDs field in the SBP response frame. Optionally, N' MAC addresses carried in the Sensing Responder Addresses field in the SBP response frame are a subset of N MAC addresses carried in the Sensing Responder Addresses field in the SBP request frame.

Optionally, in some feasible implementations, if an SBP Parameters element is present in an SBP termination (SBP Termination) frame or a DMG SBP termination frame, a related element in the SBP Parameters element is set to be the same as that in the SBP response frame. Optionally, the SBP termination frame or the DMG SBP termination frame may be transmitted by the SBP responder to the SBP initiator, or the SBP termination frame or the DMG SBP termination frame may be transmitted by the SBP initiator to the SBP responder. This is not limited herein.

Optionally, when the first termination frame indicates that a termination reason is that an SBP condition is not met, the first termination frame may include a number of (suggested) sensing responders and address information of a sensing responder. Optionally, the number of (suggested) sensing responders included in the first termination frame may be carried in a sixteenth field, and the address information of the sensing termination end included in the first termination frame may be carried in a sixth field. Optionally, the address information of the sensing termination end included in the sixth field may be a subset of the address information of the sensing termination end included in the fourth field in the first request frame.

Optionally, when the first termination frame indicates that the termination reason is that the SBP condition is not met, the first termination frame further includes one or more of the following fields: a tenth field, an eleventh field, and a twelfth field. The tenth field carries identity information of a sensing responder, the eleventh field indicates whether the first termination frame carries a preferred sensing responder list, and the twelfth field indicates a number of preferred sensing responders in the preferred sensing responder list carried in the first termination frame.

Optionally, when the first termination frame includes the tenth field, a number of pieces of address information included in the sixth field in the first termination frame may be less than or equal to a number of pieces of identity information included in the tenth field in the first termination frame. Optionally, when the number of pieces of address information included in the sixth field in the first termination frame is equal to the number of pieces of identity information included in the tenth field in the first termination frame, the address information in the sixth field may one-to-one correspond to the identity information in the tenth field. Optionally, when the number of pieces of address information included in the sixth field in the first termination frame is less than the number of pieces of identity information included in the tenth field in the first termination frame, some pieces of identity information in the tenth field may one-to-one correspond to the address information in the sixth field.

It should be noted that the first termination frame may be an SBP termination frame, or the first termination frame may be a DMG SBP termination frame. Optionally, in this embodiment of this application, the sixth field may be a field that is in the first termination frame and that carries address information of a sensing responder. For example, when the first termination frame is an SBP termination frame, the sixth field may also be referred to as a Sensing Responder Addresses field. Optionally, the tenth field may be a field that is in the first termination frame and that carries identity information of a sensing responder. For example, when the first termination frame is an SBP termination frame, the tenth field may also be referred to as a Sensing Responder IDs field. Optionally, the eleventh field may be a field that is in the first termination frame and that indicates whether a corresponding frame carries a preferred sensing responder list. For example, when the first termination frame is an SBP termination frame, the eleventh field may also be referred to as a Preferred Responder List field. Optionally, the twelfth field may be a field that is in the first termination frame and that indicates a number of preferred sensing responders in a preferred sensing responder list carried in a corresponding frame. For example, when the first termination frame is an SBP termination frame, the twelfth field may also be referred to as a Number of Preferred Responders field. Optionally, the sixteenth field may be a field that is in the first termination frame and that indicates a number of sensing responders. For example, when the first termination frame is an SBP termination frame, the sixteenth field may be referred to as a Number of Sensing Responders field.

It should be noted that names of the fields in this embodiment of this application are merely examples, and may be other names in specific implementation. This is not specifically limited in this embodiment of this application.

For ease of understanding, the following mainly uses an example in which the first termination frame is an SBP termination frame to further explain and describe content that is related to the first termination frame and that is described in S1202. For example, as shown in FIG. 5, when the value of the SBP Error Status field in the SBP termination frame is 1, it indicates that a reason for terminating an SBP procedure is that the SBP condition is incorrect (or the SBP condition does not match or the SBP condition cannot be met). In this case (that is, when the value of the SBP Error Status field is 1), an SBP Parameters element is present in the SBP termination frame, and the SBP Parameters element includes a parameter suggested by the SBP responder. For example, the SBP Parameters element may include one or more of a Number of Sensing Responders field, a Preferred Responder List field, a Number of Preferred Responders field, a Sensing Responder Addresses field, and the like. Optionally, the SBP Parameters element in the SBP termination frame may further include a Sensing Responder IDs field. In the SBP termination frame, the Number of Sensing Responders field indicates a number M' of sensing responders suggested by the SBP responder, a value 1 of the Preferred Responder List field indicates that the SBP termination frame carries a preferred sensing responder list, the Number of Preferred Responders field indicates a number N' of preferred sensing responders suggested by the SBP responder, and the number N' is equal to a number of MAC addresses carried in the Sensing Responder Addresses field in the SBP termination frame. Optionally, the number N' may alternatively be equal to a number of IDs carried in the Sensing Responder IDs field in the SBP termination frame, or the number N' is less than the number of IDs carried in the Sensing Responder IDs field in the SBP termination frame. Optionally, N' MAC addresses carried in the Sensing Responder Addresses field in the SBP termination frame are a subset of N MAC addresses carried in the Sensing Responder Addresses field in the SBP request frame.

For example, as shown in Table 3, when the value of the DMG SBP Setup Unsuccess field in the DMG SBP termination frame is 1, it indicates that DMG sensing by proxy fails to be set up. In this case (that is, when the value of the DMG SBP Setup Unsuccess field is 1), a DMG SBP Parameters element is present in the DMG SBP termination frame. The DMG SBP Parameters element includes a parameter suggested by the SBP responder. For example, the DMG SBP Parameters element may include one or more of a DMG Number of Sensing Responders field, a DMG Preferred Responder List field, a DMG Number of Preferred Responders field, a DMG Sensing Responder Addresses field, and the like. Optionally, the DMG SBP Parameters element in the SBP termination frame may further include a DMG Sensing Responder IDs field. In the SBP termination frame, the DMG Number of Sensing Responders field indicates a number M' of DMG sensing responders suggested by the SBP responder, a value 1 of the DMG Preferred Responder List field indicates that the SBP termination frame carries a DMG preferred sensing responder list, the DMG Number of Preferred Responders field indicates a number N' of DMG preferred sensing responders suggested by the SBP responder, and the number N' is equal to a number of MAC addresses carried in the DMG Sensing Responder Addresses field in the SBP termination frame. Optionally, the number N' may alternatively be equal to a number of IDs carried in the DMG Sensing Responder IDs field in the SBP termination frame, or the number N' is less than the number of IDs carried in the DMG Sensing Responder IDs field in the SBP termination frame. Optionally, N' MAC addresses carried in the DMG Sensing Responder Addresses field in the DMG SBP termination frame are a subset of N MAC addresses carried in the DMG Sensing Responder Addresses field in the DMG SBP request frame.

In this embodiment of this application, based on a non-optimized rule for setting parameters of the SBP request frame (for example, Table 5), an implementation solution in which the SBP responder cannot transmit, to the SBP initiator through the SBP response frame or the SBP termination frame, a MAC address that is not carried in the SBP request frame by the SBP initiator is proposed. Therefore, a risk of privacy leakage is reduced. In addition, this embodiment of this application further resolves a problem of how to carry a parameter when the Status Code in the SBP response frame is not SUCCESS (for example, the Status Code is REQUEST_DECLINED (REQUEST_DECLINED), or the Status Code is REJECTED_WITH_SUGGESTED_CHANGES (REJECTED_WITH_SUGGESTED_CHANGES)), or when the value of the SBP Error Status in the SBP termination frame is 1.

The foregoing describes in detail the methods in this application. To better implement the foregoing solutions in embodiments of this application, embodiments of this application further provide a corresponding apparatus or device.

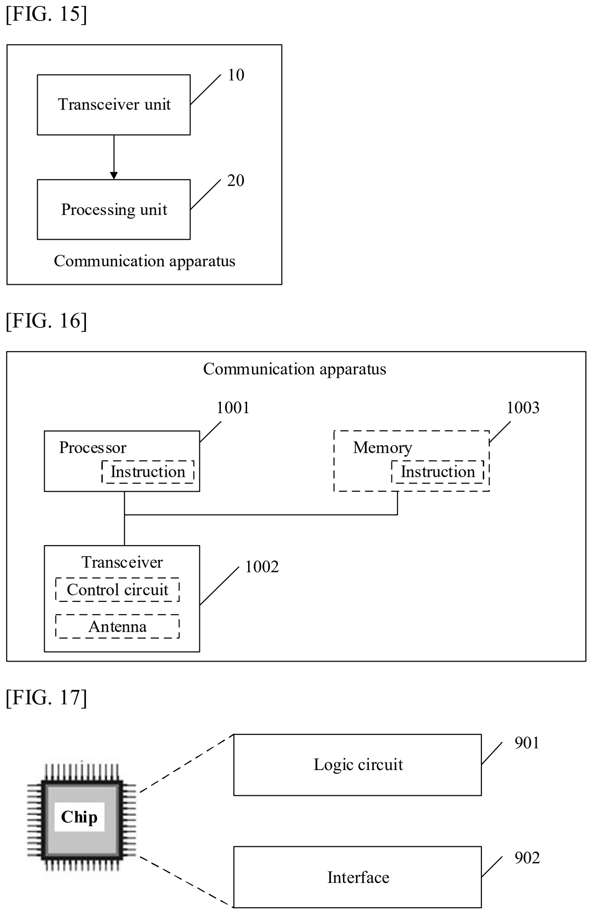

In this application, a sensing by proxy initiator, a sensing by proxy responder, and the like are divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely logical function division. In actual implementation, another division manner may be used. The communication apparatus in embodiments of this application is described below in detail with reference to FIG. 15 to FIG. 17.

FIG. 15 is a diagram of a structure of a communication apparatus according to an embodiment of this application. As shown in FIG. 15, the communication apparatus includes a transceiver unit 10 and a processing unit 20.

In some embodiments of this application, the communication apparatus may be the sensing by proxy initiator (non-AP STA) shown above or a chip in the sensing by proxy initiator, for example, a Wi-Fi chip. In other words, the communication apparatus shown in FIG. 15 may be configured to perform steps, functions, or the like performed by the sensing by proxy initiator (AP) in the foregoing method embodiments.

In a design, the processing unit 20 is configured to determine a first request frame.

The transceiver unit 10 is configured to transmit the first request frame to an SBP responder.

When a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by an SBP initiator, and the third field indicates whether the number of sensing responders is mandatory.

In another design, the transceiver unit 10 is configured to transmit a first request frame to an SBP responder.

The transceiver unit 10 is configured to receive a first response frame from the SBP responder.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by the SBP responder and address information of a sensing responder suggested by the SBP responder. Optionally, the number of sensing responders suggested by the SBP responder may be carried in a thirteenth field.

Optionally, the processing unit 20 is configured to: determine the first request frame, or parse the first response frame.

For specific descriptions of a sensing by proxy request frame, a sensing by proxy response frame, and the like, refer to the foregoing method Embodiment 1 or Embodiment 2. Details are not described herein again.

It may be understood that specific descriptions of the transceiver unit and the processing unit shown in this embodiment of this application are merely examples. For specific functions, steps, or the like of the transceiver unit and the processing unit, refer to related descriptions in the foregoing method Embodiment 1 or Embodiment 2. Details are not described herein again. For example, the processing unit 20 may be configured to perform step S902 shown in FIG. 9, and the transceiver unit 10 may be configured to perform step S901 shown in FIG. 9. For another example, the transceiver unit 10 may be configured to perform step S1201 or S1202 shown in FIG. 12.

FIG. 15 is reused. In some other embodiments of this application, the communication apparatus may be the sensing by proxy responder (AP) shown above or a chip in the sensing by proxy responder (AP), for example, a Wi-Fi chip. In other words, the communication apparatus shown in FIG. 15 may be configured to perform steps, functions, or the like performed by the sensing by proxy responder (AP) in the foregoing method embodiments.

In a design, the transceiver unit 10 is configured to receive a first request frame from an SBP initiator. When a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by the SBP initiator, and the third field indicates whether the number of sensing responders is mandatory.

The processing unit 20 is configured to parse the second field and/or the third field in the first request frame.

In another design, the transceiver unit 10 is configured to receive a first request frame from an SBP initiator.

The transceiver unit 10 is configured to transmit a first response frame to the SBP initiator.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by an SBP responder and address information of a sensing responder suggested by the SBP responder. Optionally, the number of sensing responders suggested by the SBP responder may be carried in a thirteenth field.

Optionally, the processing unit 20 is configured to determine the first response frame, or parse the first request frame.

For specific descriptions of a sensing by proxy request frame, a sensing by proxy response frame, and the like, refer to the foregoing method Embodiment 1 or Embodiment 2. Details are not described herein again.

It may be understood that specific descriptions of the transceiver unit and the processing unit shown in this embodiment of this application are merely examples. For specific functions, steps, or the like of the transceiver unit and the processing unit, refer to related descriptions in the foregoing method Embodiment 1 or Embodiment 2. Details are not described herein again. For example, the processing unit 20 may be configured to perform step S902 shown in FIG. 9, and the transceiver unit 10 may be configured to perform step S901 shown in FIG. 9. For another example, the transceiver unit 10 may be configured to perform step S1201 or S1202 shown in FIG. 12.

The foregoing describes the communication apparatus in embodiments of this application. The following describes a possible product form of the communication apparatus. It should be understood that any product in any form having functions of the communication apparatus described in FIG. 15 falls within the protection scope of embodiments of this application. It should be further understood that the following descriptions are merely examples, and do not limit the product form of the communication apparatus in embodiments of this application.

In a possible implementation, in the communication apparatus shown in FIG. 15, the processing unit 20 may be one or more processors, and the transceiver unit 10 may be a transceiver; or the transceiver unit 10 may be a transmitting unit and a receiving unit, the transmitting unit may be a transmitter, the receiving unit may be a receiver, and the transmitting unit and the receiving unit are integrated into one device, for example, a transceiver. In this embodiment of this application, the processor and the transceiver may be coupled, or the like. A manner of connecting the processor and the transceiver is not limited in this embodiment of this application. In a process of performing the foregoing methods, a process of transmitting information (for example, transmitting various frames or elements) in the foregoing methods may be understood as a process of outputting the foregoing information by the processor. When outputting the information, the processor outputs the information to the transceiver, so that the transceiver transmits the information. After the information is outputted by the processor, other processing may further need to be performed on the information before the information arrives at the transceiver. Similarly, a process of receiving information (for example, receiving various frames or elements) in the foregoing methods may be understood as a process of receiving the input information by the processor. When the processor receives the input information, the transceiver receives the information, and inputs the information into the processor. Further, after the transceiver receives the information, other processing may need to be performed on the information before the information is input into the processor.

FIG. 16 is a diagram of another structure of a communication apparatus according to an embodiment of this application. The communication apparatus may be a sensing by proxy initiator, a sensing by proxy responder, or a chip in the sensing by proxy initiator or the sensing by proxy responder. FIG. 16 shows only main components of the communication apparatus. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal, and process the radio frequency signal. The antenna is mainly configured to receive/transmit a radio frequency signal in a form of an electromagnetic wave. The input/output apparatus, such as a touchscreen, a display, or a keyboard, is mainly configured to: receive data input by a user, and output data to the user.

After the communication apparatus is powered on, the processor 1001 may read the software program in the memory 1003, interpret and execute instructions of the software program, and process the data of the software program. When data needs to be transmitted in a wireless manner, the processor 1001 performs baseband processing on the to-be-sent data, and outputs a baseband signal to a radio frequency circuit. The radio frequency circuit performs radio frequency processing on the baseband signal, and then transmits a radio frequency signal to the outside through the antenna in a form of an electromagnetic wave. When data is transmitted to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely independent of the communication apparatus.

The transceiver 1002 may include a receiver and a transmitter. The receiver is configured to perform a receiving function (or operation), and the transmitter is configured to perform a transmitting function (or operation). The transceiver is configured to communicate with another device/apparatus through a transmission medium.

The processor 1001, the transceiver 1002, and the memory 1003 may be connected through a communication bus.

For example, when the communication apparatus is configured to perform steps, methods, or functions performed by the sensing by proxy initiator, the processor 1001 is configured to determine a first request frame.

The transceiver 1002 is configured to transmit the first request frame to an SBP responder.

When a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by an SBP initiator, and the third field indicates whether the number of sensing responders is mandatory.

In another design, the transceiver 1002 is configured to transmit a first request frame to an SBP responder.

The transceiver 1002 is configured to receive a first response frame from the SBP responder.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by the SBP responder and address information of a sensing responder suggested by the SBP responder. Optionally, the number of sensing responders suggested by the SBP responder may be carried in a thirteenth field.

Optionally, the processor 1001 is configured to: determine the first request frame, or parse the first response frame.

For example, when the communication apparatus is configured to perform steps, methods, or functions performed by the sensing by proxy responder, the transceiver 1002 is configured to receive a first request frame from an SBP initiator. When a value of a first field in the first request frame indicates that a preferred sensing responder in a preferred sensing responder list carried in the first request frame is mandatory, a second field and/or a third field in the first request frame are/is not reserved fields/a reserved field. The second field indicates a number of sensing responders requested by the SBP initiator, and the third field indicates whether the number of sensing responders is mandatory.

The processor 1001 is configured to parse the second field and/or the third field in the first request frame.

In another design, the transceiver 1002 is configured to receive a first request frame from an SBP initiator.

The transceiver unit 10 is configured to transmit a first response frame to the SBP initiator.

When the first response frame indicates to accept the first request frame, address information of a sensing responder included in the first response frame is a subset of address information of a sensing responder included in the first request frame.

When the first response frame indicates to reject the first request frame, the first response frame includes a number of sensing responders suggested by an SBP responder and address information of a sensing responder suggested by the SBP responder. Optionally, the number of sensing responders suggested by the SBP responder may be carried in a thirteenth field.

Optionally, the processor 1001 is configured to: determine the first response frame, or parse the first request frame.

In this embodiment of this application, for descriptions of a sensing by proxy request frame, a sensing by proxy response frame, and the like, refer to descriptions in the foregoing method Embodiment 1 or Embodiment 2. Details are not described herein again. It may be understood that for specific descriptions of the processor and the transceiver, refer to descriptions of the processing unit and the transceiver unit shown in FIG. 15. Details are not described herein again.

Optionally, the processor 1001 may store instructions. The instructions may be a computer program. The computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit, and the circuit may implement a transmitting, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may alternatively include more components than those shown in FIG. 16, or the like. This is not limited in this embodiment of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 15, the processing unit 20 may be one or more logic circuits, and the transceiver unit 10 may be an input/output interface, or referred to as a communication interface, an interface circuit, an interface, or the like. Alternatively, the transceiver unit 10 may be a transmitting unit and a receiving unit. The transmitting unit may be an output interface, the receiving unit may be an input interface, and the transmitting unit and the receiving unit are integrated into one unit, for example, an input/output interface. FIG. 17 is a diagram of still another structure of a communication apparatus according to an embodiment of this application. As shown in FIG. 17, the communication apparatus shown in FIG. 17 includes a logic circuit 901 and an interface 902. In other words, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 17 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

For example, when the communication apparatus is configured to perform steps, methods, or functions performed by the sensing by proxy initiator, the interface 902 is configured to: transmit a sensing by proxy request frame, and receive a sensing by proxy response frame. Optionally, the logic circuit 901 is configured to generate the sensing by proxy request frame.

For example, when the communication apparatus is configured to perform steps, methods, or functions performed by the sensing by proxy responder, the interface 902 is configured to: receive a sensing by proxy request frame, and transmit a sensing by proxy response frame. Optionally, the logic circuit 901 is configured to generate the sensing by proxy response frame.

In this embodiment of this application, for descriptions of the sensing by proxy request frame, the sensing by proxy response frame, a sensing by proxy initiator, a sensing by proxy responder, and the like, refer to descriptions in the foregoing method Embodiment 1 or Embodiment 2. Details are not described herein again. It may be understood that for specific descriptions of the logic circuit 901 and the interface 902, refer to descriptions of the processing unit and the transceiver unit shown in FIG. 15. Details are not described herein again.

It may be understood that the communication apparatus shown in this embodiment of this application may implement the methods provided in embodiments of this application in a form of hardware, or may implement the methods provided in embodiments of this application in a form of software. This is not limited in embodiments of this application.

For specific implementations of the embodiments shown in FIG. 17, refer to the foregoing embodiments. Details are not described herein again.

An embodiment of this application further provides a wireless communication system. The wireless communication system includes a sensing by proxy initiator and a sensing by proxy responder, and the sensing by proxy initiator and the sensing by proxy responder may be configured to perform the method in any one of the foregoing method Embodiment 1 and 2.

In addition, this application further provides a computer program. The computer program is used to implement operations and/or processing performed by a sensing by proxy initiator in the methods provided in this application.

This application further provides a computer program. The computer program is used to implement operations and/or processing performed by a sensing by proxy responder in the methods provided in this application.

This application further provides a computer-readable storage medium. The computer-readable storage medium stores computer code. When the computer code runs on a computer, the computer is enabled to perform operations and/or processing performed by a sensing by proxy initiator in the methods provided in this application.

This application further provides a computer-readable storage medium. The computer-readable storage medium stores computer code. When the computer code runs on a computer, the computer is enabled to perform operations and/or processing performed by a sensing by proxy responder in the methods provided in this application.

This application further provides a computer program product. The computer program product includes computer code or a computer program. When the computer code or the computer program is run on a computer, operations and/or processing performed by a sensing by proxy initiator in the methods provided in this application are/is performed.

This application further provides a computer program product. The computer program product includes computer code or a computer program. When the computer code or the computer program is run on a computer, operations and/or processing performed by a sensing by proxy responder in the methods provided in this application are/is performed.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a sensing by proxy SBP responder, a first request frame from an SBP initiator; and
transmitting, by the SBP responder, a first response frame to the SBP initiator, wherein
the first response frame indicates to accept the first request frame, and address information of a sensing responder comprised in the first response frame is a subset of address information of a sensing responder comprised in the first request frame.

2. The method according to claim 1, wherein the address information of the sensing responder comprised in the first request frame is carried in a fourth field, and the address information of the sensing responder comprised in the first response frame is carried in a fifth field; and the address information of the sensing responder comprised in the fifth field in the first response frame is a subset of the address information of the sensing responder comprised in the fourth field in the first request frame.

3. The method according to claim 1 or 2, wherein the first request frame further comprises a first field, and the first field indicates whether a preferred sensing responder in a preferred sensing responder list carried in the first request frame is mandatory; and
when the first response frame indicates to accept the first request frame, and a value of the first field in the first request frame indicates that the preferred sensing responder in the preferred sensing responder list carried in the first request frame is optional, the address information of the sensing responder comprised in the fifth field in the first response frame is the subset of the address information of the sensing responder comprised in the fourth field in the first request frame.

4. The method according to claim 3, wherein the first response frame further comprises a seventh field, and the seventh field carries identity information of the sensing responder; and
a number of pieces of address information of sensing responders comprised in the fifth field in the first response frame is less than or equal to a number of pieces of identity information of sensing responders comprised in the seventh field in the first response frame.

5. The method according to any one of claims 1 to 4, wherein the first request frame is an SBP request frame, or the first request frame is a directional multi-gigabit DMG SBP request frame.

6. The method according to any one of claims 1 to 5, wherein the first response frame is an SBP response frame, or the first response frame is a directional multi-gigabit DMG SBP response frame.

7. A communication method, comprising:
transmitting, by a sensing by proxy SBP initiator, a first request frame to an SBP responder; and
receiving, by the SBP initiator, a first response frame from the SBP responder, wherein
the first response frame indicates to accept the first request frame, and address information of a sensing responder comprised in the first response frame is a subset of address information of a sensing responder comprised in the first request frame.

8. The method according to claim 7, wherein the address information of the sensing responder comprised in the first request frame is carried in a fourth field, and the address information of the sensing responder comprised in the first response frame is carried in a fifth field; and the address information of the sensing responder comprised in the fifth field in the first response frame is a subset of the address information of the sensing responder comprised in the fourth field in the first request frame.

9. The method according to claim 7 or 8, wherein the first request frame further comprises a first field, and the first field indicates whether a preferred sensing responder in a preferred sensing responder list carried in the first request frame is mandatory; and
when the first response frame indicates to accept the first request frame, and a value of the first field in the first request frame indicates that the preferred sensing responder in the preferred sensing responder list carried in the first request frame is optional, the address information of the sensing responder comprised in the fifth field in the first response frame is the subset of the address information of the sensing responder comprised in the fourth field in the first request frame.

10. The method according to claim 9, wherein the first response frame further comprises a seventh field, and the seventh field is carries identity information of the sensing responder; and
a number of pieces of address information of sensing responders comprised in the fifth field in the first response frame is less than or equal to a number of pieces of identity information of sensing responders comprised in the seventh field in the first response frame.

11. The method according to any one of claims 7 to 10, wherein the first request frame is an SBP request frame, or the first request frame is a directional multi-gigabit DMG SBP request frame.

12. The method according to any one of claims 7 to 11, wherein the first response frame is an SBP response frame, or the first response frame is a directional multi-gigabit DMG SBP response frame.

13. A communication apparatus, comprising a unit or a module configured to perform the method according to any one of claims 1 to 6, or comprising a unit or a module configured to perform the method according to any one of claims 7 to 12.

14. A communication apparatus, comprising a processor and an interface circuit, wherein the interface circuit is configured to: receive a signal from a communication apparatus other than the communication apparatus and transmit the signal to the processor, or transmit a signal from the processor to a communication apparatus other than the communication apparatus; and the processor is configured to implement the method according to any one of claims 1 to 6 or the method according to any one of claims 7 to 12 through a logic circuit or by executing code instructions.

15. A computer-readable storage medium, wherein the storage medium stores a computer program or instructions, and when the computer program or the instructions are executed by a communication apparatus, the method according to any one of claims 1 to 6 or the method according to any one of claims 7 to 12 is implemented.

16. A computer program product, comprising computer program code, wherein when the computer program code runs on a computer, the computer program code is used to implement the method according to any one of claims 1 to 6, or implement the method according to any one of claims 7 to 12.
